(19) **Europäisches Patentamt**
**European Patent Office**
**Office européen des brevets**

(11) **EP 4 738 681 A1**

(12) **EUROPEAN PATENT APPLICATION**
published in accordance with Art. 153(4) EPC

(43) Date of publication:
06.05.2026 Bulletin 2026/19

(21) Application number: 24831566.5

(22) Date of filing: 03.06.2024

(51) International Patent Classification (IPC):
*H02M 7/487* (2007.01)

(52) Cooperative Patent Classification (CPC):
H02M 7/487

(86) International application number:
PCT/JP2024/020138

(87) International publication number:
WO 2025/004696 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 JP 2023105413

(71) Applicant: Panasonic Intellectual Property
Management Co., Ltd.
Kadoma-shi, Osaka 571-0057 (JP)

(72) Inventors:
• NAKAMURA, Hirokazu
kadoma-shi, Osaka 571-0057 (JP)
• HEGDE, Anantha
kadoma-shi, Osaka 571-0057 (JP)
• KABASHIMA, Takamune
kadoma-shi, Osaka 571-0057 (JP)
• SUZUKI, Asamira
kadoma-shi, Osaka 571-0057 (JP)

(74) Representative: Novagraaf International SA
Chemin de l'Echo 3
1213 Onex, Geneva (CH)

(54) **MULTILEVEL INVERTER**

(57)     Disclosed herein is a technique for cutting down switching loss. In a multi-level inverter (100), a control unit (60) has an initial charging control function of making initial charging of a first capacitor (C17), a second capacitor (C27), and a third capacitor (C37) during booting. The control unit (60) performs, during the initial charging control, either first control of allowing only a third switching element (Q3) and a fourth switching element (Q4) to be ON after having turned ON only the fourth switching element (Q4), or second control of allowing only the third switching element (Q3) and the fourth switching element (Q4) to be ON, and then alternately performs third control of allowing only a second switching element (Q2) and the third switching element (Q3) to be ON and fourth control of allowing only the third switching element (Q3) and the fourth switching element (Q4) to be ON.

FIG. 1

**Description**

**Technical Field**

The present disclosure generally relates to a multi-level inverter, and more particularly relates to a multi-level inverter including a bootstrap circuit.

**Background Art**

Patent Literature 1 discloses a switching element driver circuit for a three-level neutral point clamping inverter in which first, second, third, and fourth switching elements are connected in series between a positive-side terminal and negative-side terminal of a DC power supply. The switching element driver circuit includes: an element driving power supply which uses a potential at a negative-side terminal thereof as a potential reference; a fourth element driving unit (fourth gate driver); a third diode; a third element driving unit (third gate driver); a third capacitor; a second diode; a second element driving unit (second gate driver); a second capacitor; a first diode; a first element driving unit (first gate driver); and a first capacitor. The fourth element driving unit is connected between a positive-side terminal and negative-side terminal of the element driving power supply to drive the fourth switching element. The third diode has an anode connected to the positive-side terminal of the element driving power supply. The third element driving unit is connected between a cathode of the third diode and a common connection node of the third and fourth switching elements to drive the third switching element. The third capacitor is connected to the third element driving unit in parallel. The second diode has an anode connected to the cathode of the third diode. The second element driving unit is connected between a cathode of the second diode and a common connection node of the second and third switching elements to drive the second switching element. The second capacitor is connected to the second element driving unit in parallel. The first diode has an anode connected to a cathode of the second diode. The first element driving unit is connected between a cathode of the first diode and a common connection node of the first and second switching elements to drive the first switching element. The first capacitor is connected to the first element driving unit in parallel.

**Citation List**

**Patent Literature**

Patent Literature 1: JP 2018-133876 A

**Summary of Invention**

In a multi-level inverter including a three-level neutral point clamping inverter and switching element driver circuit as disclosed in Patent Literature 1, the switching loss caused by each of the first, second, and third switching elements increases in some cases.

An object of the present disclosure is to provide a multi-level inverter which may cut down the switching loss.

A multi-level inverter according to an aspect of the present disclosure includes a DC power supply unit, an inverter circuit, and a controller. The DC power supply unit includes a positive electrode, a negative electrode, and an intermediate potential node. The inverter circuit is connected between the positive electrode and the negative electrode of the DC power supply unit. The controller controls the inverter circuit. The inverter circuit includes a switching circuit, a first clamping diode, and a second clamping diode. The switching circuit includes a first switching element, a second switching element, a third switching element, and a fourth switching element. In the switching circuit, the first switching element, the second switching element, the third switching element, and the fourth switching element are connected in series to be arranged in this order from the positive electrode toward the negative electrode. The first clamping diode is connected between a first connection node of the first switching element and the second switching element and the intermediate potential node. The second clamping diode is connected between a second connection node of the third switching element and the fourth switching element and the intermediate potential node. The controller includes a first gate driver, a second gate driver, a third gate driver, a fourth gate driver, a first bootstrap circuit, a second bootstrap circuit, a third bootstrap circuit, a power supply unit, and a control unit. The first gate driver drives the first switching element. The second gate driver drives the second switching element. The third gate driver drives the third switching element. The fourth gate driver drives the fourth switching element. The first bootstrap circuit includes a first capacitor connected to the first gate driver in parallel and a first diode connected to the first capacitor in series. The second bootstrap circuit includes a second capacitor connected to the second gate driver in parallel and a second diode connected to the second capacitor in series. The third bootstrap circuit includes a third capacitor connected to the third gate driver in parallel and a third diode connected to the third capacitor in series. The power supply unit is connected to the fourth gate driver in parallel. The control unit controls the first gate driver, the second gate driver, the third gate driver, and the fourth gate driver. The power supply unit is connected to the third capacitor via the third diode, connected to the second capacitor via the third diode and the second diode, and connected to the first capacitor via the third diode, the second diode, and the first diode. The control unit has an initial charging control function of making initial charging of the first capacitor, the second capacitor, and the third capacitor during booting. The control unit performs, during the initial charging control, either first control of allowing only the third switching element and the fourth switching element to be ON after having turned ON only the fourth switching element, or second control of allowing only the third switching element and the fourth switching element to be ON, and then alternately performs third control of allowing only the second switching element and the third switching element to be ON and fourth control of allowing only the third switching element and the fourth switching element to be ON.

A multi-level inverter according to the present disclosure achieves the advantage of cutting down switching loss.

## Brief Description of Drawings

[FIG. 1] FIG. 1 is a circuit diagram of a system including a multi-level inverter according to an exemplary embodiment;

[FIG. 2] FIG. 2 illustrates a current path in a situation where a switching circuit of the multi-level inverter according to the exemplary embodiment is in a first switching state;

[FIG. 3] FIG. 3 illustrates a discharging path and charging path in the situation where the switching circuit of the multi-level inverter according to the exemplary embodiment is in the first switching state;

[FIG. 4] FIG. 4 illustrates a current path in a situation where the switching circuit of the multi-level inverter according to the exemplary embodiment is in a second switching state;

[FIG. 5] FIG. 5 illustrates a discharging path and charging path in the situation where the switching circuit of the multi-level inverter according to the exemplary embodiment is in the second switching state;

[FIG. 6] FIG. 6 illustrates a current path in a situation where the switching circuit of the multi-level inverter according to the exemplary embodiment is in a third switching state;

[FIG. 7] FIG. 7 illustrates a discharging path and charging path in the situation where the switching circuit of the multi-level inverter according to the exemplary embodiment is in the third switching state;

[FIG. 8] FIG. 8 shows voltage command values for respective phases in the multi-level inverter according to the exemplary embodiment;

[FIG. 9] FIG. 9 illustrates a group of voltage vectors with respect to the multi-level inverter according to the exemplary embodiment;

[FIG. 10] FIG. 10 illustrates the group of voltage vectors more specifically with respect to the multi-level inverter according to the exemplary embodiment;

[FIG. 11] FIG. 11 is a vector diagram illustrating how a control unit operates in the multi-level inverter according to the exemplary embodiment;

[FIG. 12] FIG. 12 is a timing chart showing switching states in respective phases of the multi-level inverter according to the exemplary embodiment;

[FIG. 13] FIG. 13 is a timing chart illustrating the ON/OFF states of first to fourth switching elements of the multi-level inverter according to the exemplary embodiment;

[FIG. 14] FIG. 14 illustrates a charging path for a third capacitor in a situation where a control unit has turned ON only a fourth switching element while performing initial charging control in the multi-level inverter according to the exemplary embodiment;

[FIG. 15] FIG. 15 illustrates a charging path for a second capacitor and a charging path for the third capacitor in a situation where the control unit allows only a third switching element and the fourth switching element to be ON while performing the initial charging control in the multi-level inverter according to the exemplary embodiment;

[FIG. 16] FIG. 16 illustrates a charging path for a first capacitor and a charging path for the second capacitor in a situation where the control unit allows only a second switching element and the third switching element to be ON while performing the initial charging control in the multi-level inverter according to the exemplary embodiment; and

[FIG. 17] FIG. 17 illustrates operating waveforms in a situation where the control unit has performed the initial charging operation in the multi-level inverter according to the exemplary embodiment.

## Description of Embodiments

(Embodiment)

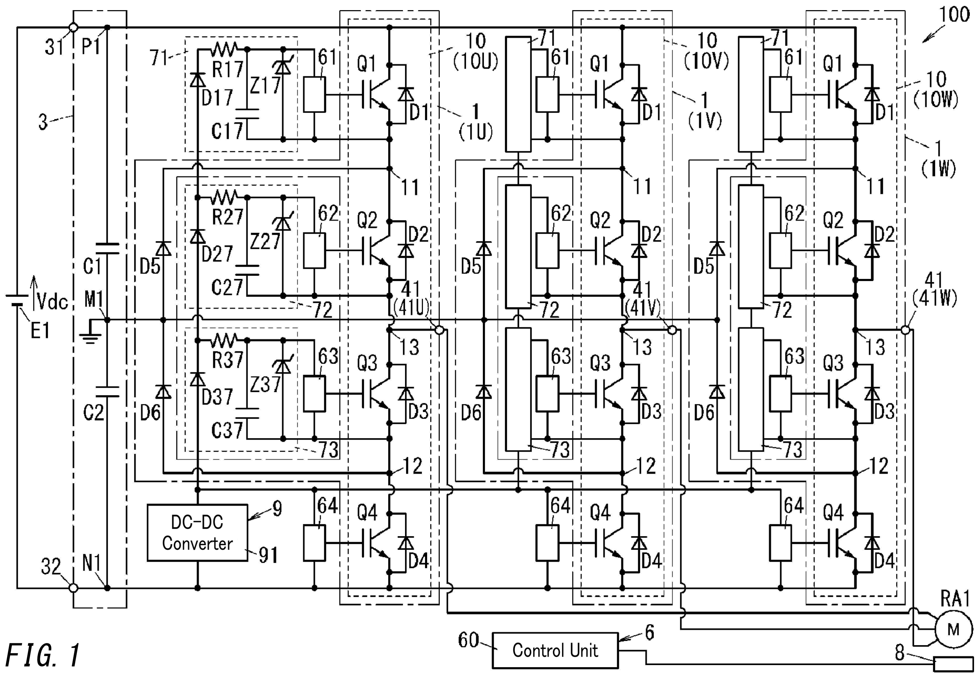

A multi-level inverter 100 according to an exemplary embodiment will now be described with reference to FIGS. 1-17.

(1) Overall configuration for multi-level inverter

FIG. 1 is a circuit diagram of a system including a multi-level inverter 100 according to an exemplary embodiment. As shown in FIG. 1, the multi-level inverter 100 may include, for example, a DC power supply 3, a plurality of (e.g., three in the example illustrated in FIG. 1) inverter circuits 1, and a controller 6. The DC power supply 3 includes a positive electrode P1, a negative electrode N1, and an intermediate potential node M1. The plurality of inverter circuits 1 are connected between the positive electrode P1 and negative electrode N1 of the DC power supply 3. The controller 6 controls the plurality of inverter circuits 1. As used herein, the "intermediate potential node M1" refers to a node where the potential is intermediate between a potential at the positive electrode P1 of the DC power supply 3 and a potential at the negative electrode N1 thereof.

The multi-level inverter 100 is a diode-clamping three-level three-phase inverter. In the multi-level inverter 100, each of the plurality of inverter circuits 1 has an output terminal 41. In the multi-level inverter 100, an AC load RA1 is connected to the plurality of (e.g., three in the example illustrated in FIG. 1) output terminals 41.

The AC load RA1 may be, for example, a three-phase servo motor. In the multi-level inverter 100, one of the plurality of inverter circuits 1 is an inverter circuit 1U for outputting a U-phase voltage, another one of the plurality of inverter circuits 1 is an inverter circuit 1V for outputting a V-phase voltage, and the other one of the plurality of inverter circuits 1 is an inverter circuit 1W for outputting a W-phase voltage.

Each of the plurality of inverter circuits 1 includes a switching circuit 10, a first clamping diode D5, and a second clamping diode D6. In the multi-level inverter 100, a potential at the intermediate potential node M1 is clamped by the first clamping diode D5 and the second clamping diode D6 of each inverter circuit 1.

Each switching circuit 10 includes a first switching element Q1, a second switching element Q2, a third switching element Q3, and a fourth switching element Q4. In each switching circuit 10, the first switching element Q1, the second switching element Q2, the third switching element Q3, and the fourth switching element Q4 are connected in series to be arranged in this order from the positive electrode P1 of the DC power supply 3 toward the negative electrode N1 thereof.

Each switching circuit 10 further includes four diodes D1-D4. The diode D1 is connected to the first switching element Q1 in antiparallel. The diode D2 is connected to the second switching element Q2 in antiparallel. The diode D3 is connected to the third switching element Q3 in antiparallel. The diode D4 is connected to the fourth switching element Q4 in antiparallel. The first clamping diode D5 is connected between a first connection node 11 of the first switching element Q1 and the second switching element Q2 and the intermediate potential node M1. The second clamping diode D6 is connected between a second connection node 12 of the third switching element Q3 and the fourth switching element Q4 and the intermediate potential node M1.

The controller 6 includes a plurality of (e.g., three in the example illustrated in FIG. 1) first gate drivers 61, a plurality of (e.g., three in the example illustrated in FIG. 1) second gate drivers 62, a plurality of (e.g., three in the example illustrated in FIG. 1) third gate drivers 63, and a plurality of (e.g., three in the example illustrated in FIG. 1) fourth gate drivers 64. In addition, the controller 6 further includes a plurality of (e.g., three in the example illustrated in FIG. 1) first bootstrap circuits 71, a plurality of (e.g., three in the example illustrated in FIG. 1) second bootstrap circuits 72, a plurality of (e.g., three in the example illustrated in FIG. 1) third bootstrap circuits 73, a power supply unit 9, and a control unit 60.

Each of the plurality of first gate drivers 61 drives the first switching element Q1 of a corresponding one of the plurality of inverter circuits 1. Each of the plurality of second gate drivers 62 drives the second switching element Q2 of a corresponding one of the plurality of inverter circuits 1. Each of the plurality of third gate drivers 63 drives the third switching element Q3 of a corresponding one of the plurality of inverter circuits 1. Each of the plurality of fourth gate drivers 64 drives the fourth switching element Q4 of a corresponding one of the plurality of inverter circuits 1.

The plurality of first bootstrap circuits 71 are provided one to one for the plurality of first gate drivers 61. Each of the plurality of first bootstrap circuits 71 includes a first capacitor C17 connected to a corresponding one of the plurality of first gate drivers 61 in parallel and a first diode D17 connected to the first capacitor C17 in series. The plurality of second bootstrap circuits 72 are provided one to one for the plurality of second gate drivers 62. Each of the plurality of second bootstrap circuits 72 includes a second capacitor C27 connected to a corresponding one of the plurality of second gate drivers 62 in parallel and a second diode D27 connected to the second capacitor C27 in series. The plurality of third bootstrap circuits 73 are provided one to one for the plurality of third gate drivers 63. Each of the plurality of third bootstrap circuits 73 includes a third capacitor C37 connected to a corresponding one of the plurality of third gate drivers 63 in parallel and a third diode D37 connected to the third capacitor C37 in series.

The power supply unit 9 is connected to the plurality of fourth gate drivers 64 in parallel. Also, the power supply unit 9 is connected to the third capacitor C37 via the third diode D37. In addition, the power supply unit 9 is connected to the second capacitor C27 via the third diode D37 and the second diode D27. Furthermore, the power supply unit 9 is connected to the first capacitor C17 via the third diode D37, the second diode D27, and the first diode D17.

The control unit 60 controls the plurality of first gate drivers 61, the plurality of second gate drivers 62, the plurality of third gate drivers 63, and the plurality of fourth gate drivers 64.

(2) Details of multi-level inverter

The DC power supply 3 includes a fourth capacitor C1 and a fifth capacitor C2. In the DC power supply 3, the fourth capacitor C1 and the fifth capacitor C2 are connected in series. The DC power supply 3 further includes a first DC terminal 31 connected to the positive electrode P1 and a second DC terminal 32 connected to the negative electrode N1. In the DC power supply 3, a first end of the fourth capacitor C1 is connected to the first DC terminal 31, a second end of the fourth capacitor C1 is connected to a first end of the fifth capacitor C2, and a second end of the fifth capacitor C2 is connected to the second DC terminal 32. In the DC power supply 3, a connection node between the fourth capacitor C1 and the fifth capacitor C2 is the intermediate potential node M1. A DC voltage source E1, for example, may be connected between the first DC terminal 31 and the second DC terminal 32. In that case, an output voltage Vdc of the DC voltage source E1 is applied to between the positive electrode P1 and negative electrode N1 of the DC power supply 3. Note that the capacitance of the fifth capacitor C2 is equal to the capacitance of the fourth capacitor C1. As used herein, the expression "the capacitance of the fifth capacitor C2 is equal to the capacitance of the fourth capacitor C1" refers to not only a situation where the capacitance of the fifth capacitor C2 is exactly equal to the capacitance of the fourth capacitor C1 but also a situation where the capacitance of the fifth capacitor C2 is equal to or greater than 95% and equal to or less than 105% of the capacitance of the fourth capacitor C1.

In the following description, as for the plurality of switching circuits 10, the switching circuit 10 included in the inverter circuit 1U will be hereinafter referred to as a "switching circuit 10U," the switching circuit 10 included in the inverter circuit 1V will be hereinafter referred to as a "switching circuit 10V," and the switching circuit 10 included in the inverter circuit 1W will be hereinafter referred to as a "switching circuit 10W" for the sake of convenience of description. In the same way, as for the plurality of output terminals 41, the output terminal 41 included in the inverter circuit 1U will be hereinafter referred to as an "output terminal 41U," the output terminal 41 included in the inverter circuit 1V will be hereinafter referred to as an "output terminal 41V," and the output terminal included in the inverter circuit 1W will be hereinafter referred to as an "output terminal 41W."

In each switching circuit 10, the first switching element Q1, the second switching element Q2, the third switching element Q3, and the fourth switching element Q4 each have a control terminal, a first main terminal, and a second main terminal. The first switching element Q1, the second switching element Q2, the third switching element Q3, and the fourth switching element Q4 of each switching circuit 10 may be, for example, insulated gate bipolar transistors (IGBTs). Thus, in each switching circuit 10, the control terminal, the first main terminal, and the second main terminal of each of the first switching element Q1, the second switching element Q2, the third switching element Q3, and the fourth switching element Q4 are a gate terminal, a collector terminal, and an emitter terminal, respectively.

In each switching circuit 10, the control terminal of the first switching element Q1 is connected to a corresponding one of the plurality of first gate drivers 61. Also, in each switching circuit 10, the control terminal of the second switching element Q2 is connected to a corresponding one of the plurality of second gate drivers 62. Furthermore, in each switching circuit 10, the control terminal of the third switching element Q3 is connected to a corresponding one of the plurality of third gate drivers 63. Furthermore, in each switching circuit 10, the control terminal of the fourth switching element Q4 is connected to a corresponding one of the plurality of fourth gate drivers 64.

In each switching circuit 10, the first main terminal of the first switching element Q1 is connected to the positive electrode P1 of the DC power supply 3, and the second main terminal of the first switching element Q1 is connected to the first main terminal of the second switching element Q2. Also, in each switching circuit 10, the second main terminal of the second switching element Q2 is connected to the first main terminal of the third switching element Q3. Furthermore, in each switching circuit 10, the second main terminal of the third switching element Q3 is connected to the first main terminal of the fourth switching element Q4 and the second main terminal of the fourth switching element Q4 is connected to the negative electrode N1 of the DC power supply 3.

In the inverter circuit 1U, the third connection node 13 between the second switching element Q2 and the third switching element Q3 of the switching circuit 10U is connected to the output terminal 41U. In the inverter circuit 1V, the third connection node 13 between the second switching element Q2 and the third switching element Q3 of the switching circuit 10V is connected to the output terminal 41V. In the inverter circuit 1W, the third connection node 13 between the second switching element Q2 and the third switching element Q3 of the switching circuit 10W is connected to the output terminal 41W. To the third connection node 13 of the inverter circuit 1U, connected, via the output terminal 41U, is the U-phase of the AC load RA1, for example. To the third connection node 13 of the inverter circuit 1V, connected, via the output terminal 41V, is the V-phase of the AC load RA1, for example. To the third connection node 13 of the inverter circuit 1W, connected, via the output terminal 41W, is the W-phase of the AC load RA1, for example.

In each switching circuit 10, the anode of the diode D1 is connected to the second main terminal (emitter terminal) of the first switching element Q1, and the cathode of the diode D1 is connected to the first main terminal (collector terminal) of the first switching element Q1. Also, in each switching circuit 10, the anode of the diode D2 is connected to the second main terminal (emitter terminal) of the second switching element Q2, and the cathode of the diode D2 is connected to the first main terminal (collector terminal) of the second switching element Q2. Furthermore, in each switching circuit 10, the anode of the diode D3 is connected to the second main terminal (emitter terminal) of the third switching element Q3, and the cathode of the diode D3 is connected to the first main terminal (collector terminal) of the third switching element Q3. Furthermore, in each switching circuit 10, the anode of the diode D4 is connected to the second main terminal (emitter terminal) of the fourth switching element Q4, and the cathode of the diode D4 is connected to the first main terminal (collector terminal) of the fourth switching element Q4.

In each switching circuit 10, the diode D1 may be replaced with a parasitic diode of an IGBT serving as the first switching element Q1. Also, in each switching circuit 10, the diode D2 may be replaced with a parasitic diode of an IGBT serving as the second switching element Q2. Furthermore, in each switching circuit 10, the diode D3 may be replaced with a parasitic diode of an IGBT serving as the third switching element Q3. Furthermore, in each switching circuit 10, the diode D4 may be replaced with a parasitic diode of an IGBT serving as the fourth switching element Q4.

In each inverter circuit 1, the cathode of the first clamping diode D5 is connected to the first connection node 11 between the first switching element Q1 and the second switching element Q2. On the other hand, the anode of the first clamping diode D5 is connected to the intermediate potential node M1 of the DC power supply 3. In this embodiment, the intermediate potential node M1 is connected to the ground, and therefore, the potential at the intermediate potential node M1 is 0 V. In this case, supposing the voltage across the DC power supply 3 is Vdc, the potential at the positive electrode P1 is Vdc/2, while the potential at the negative electrode N1 is -Vdc/2.

The cathode of the second clamping diode D6 is connected to the intermediate potential node M1. The anode of the second clamping diode D6 is connected to the second connection node 12 between the third switching element Q3 and the fourth switching element Q4.

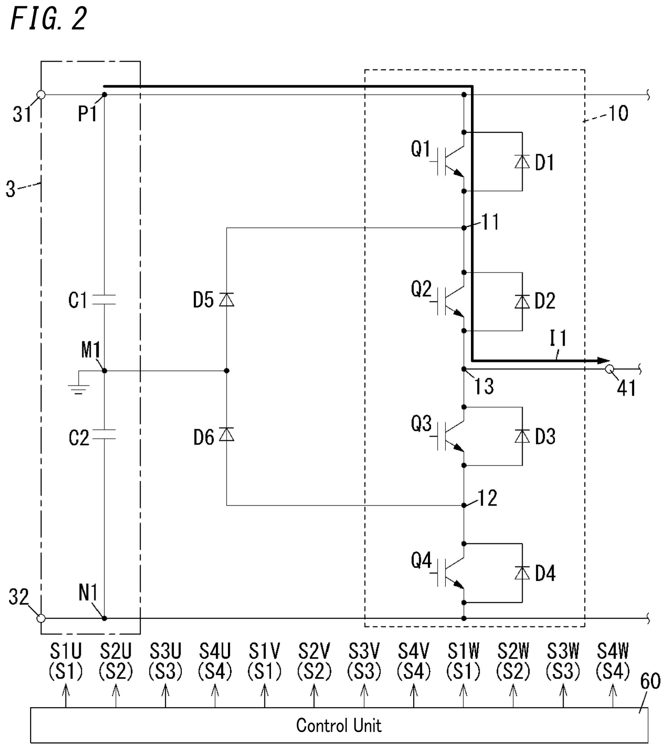

The plurality of first gate drivers 61 are provided one to one for the plurality of first switching elements Q1. Each of the plurality of first gate drivers 61 is connected to the control terminal of a corresponding one of the plurality of first switching elements Q1. Each of the plurality of first gate drivers 61 drives a corresponding one of the plurality of first switching elements Q1. The plurality of first gate drivers 61 are connected to the control unit 60. The control unit 60 outputs a plurality of first control signals S1 (refer to FIG. 2) which are associated one to one with the plurality of first gate drivers 61. Each of the plurality of first gate drivers 61 controls the ON/OFF states of a corresponding one of the plurality of first switching elements Q1 in accordance with the first control signal S1 supplied thereto.

The plurality of second gate drivers 62 are provided one to one for the plurality of second switching elements Q2. Each of the plurality of second gate drivers 62 is connected to the control terminal of a corresponding one of the plurality of second switching elements Q2. Each of the plurality of second gate drivers 62 drives a corresponding one of the plurality of second switching elements Q2. The plurality of second gate drivers 62 are connected to the control unit 60. The control unit 60 outputs a plurality of second control signals S2 (refer to FIG. 2) which are associated one to one with the plurality of second gate drivers 62. Each of the plurality of second gate drivers 62 controls the ON/OFF states of a corresponding one of the plurality of second switching elements Q2 in accordance with the second control signal S2 supplied thereto.

The plurality of third gate drivers 63 are provided one to one for the plurality of third switching elements Q3. Each of the plurality of third gate drivers 63 is connected to the control terminal of a corresponding one of the plurality of third switching elements Q3. Each of the plurality of third gate drivers 63 drives a corresponding one of the plurality of third switching elements Q3. The plurality of third gate drivers 63 are connected to the control unit 60. The control unit 60 outputs a plurality of third control signals S3 (refer to FIG. 2) which are associated one to one with the plurality of third gate drivers 63. Each of the plurality of third gate drivers 63 controls the ON/OFF states of a corresponding one of the plurality of third switching elements Q3 in accordance with the third control signal S3 supplied thereto.

The plurality of fourth gate drivers 64 are provided one to one for the plurality of fourth switching elements Q4. Each of the plurality of fourth gate drivers 64 is connected to the control terminal of a corresponding one of the plurality of fourth switching elements Q4. Each of the plurality of fourth gate drivers 64 drives a corresponding one of the plurality of fourth switching elements Q4. The plurality of fourth gate drivers 64 are connected to the control unit 60. The control unit 60 outputs a plurality of fourth control signals S4 (refer to FIG. 2) which are associated one to one with the plurality of fourth gate drivers 64. Each of the plurality of fourth gate drivers 64 controls the ON/OFF states of a corresponding one of the plurality of fourth switching elements Q4 in accordance with the fourth control signal S4 supplied thereto.

Each of the plurality of first bootstrap circuits 71 supplies voltage to a corresponding one of the plurality of first gate drivers 61. Each of the plurality of first bootstrap circuits 71 includes not only the first capacitor C17 and the first diode D17 but also a first resistor R17 as well.

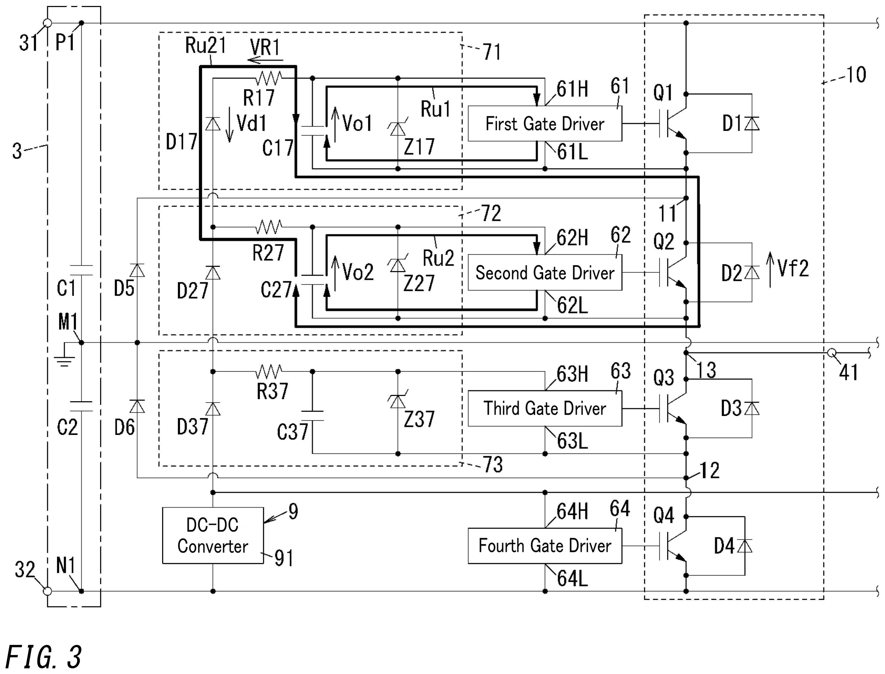

In each of the plurality of first bootstrap circuits 71, the anode of the first diode D17 is connected to the positive-side terminal of the power supply unit 9 via the second diode D27 and the third diode D37. In each of the plurality of first bootstrap circuits 71, the cathode of the first diode D17 is connected to a first end of the first capacitor C17 via the first resistor R17. The first end of the first capacitor C17 is connected to a higher-potential power supply terminal 61H (refer to FIG. 3) of the first gate driver 61. A second end of the first capacitor C17 is connected to a lower-potential power supply terminal 61L (refer to FIG. 3) of the first gate driver 61. The first bootstrap circuit 71 supplies, to the first gate driver 61, a voltage required for the first gate driver 61 to turn ON the first switching element Q1 (i.e., a voltage greater than a threshold voltage of the first switching element Q1). Each of the plurality of first bootstrap circuits 71 further includes a first Zener diode Z17 connected to the first capacitor C17 in parallel. In each of the plurality of first bootstrap circuits 71, the cathode of the first Zener diode Z17 is connected to the first end of the first capacitor C17 and the anode of the first Zener diode Z17 is connected to the second end of the first capacitor C17.

Each of the plurality of second bootstrap circuits 72 supplies voltage to a corresponding one of the plurality of second gate drivers 62. Each of the plurality of second bootstrap circuits 72 includes not only the second capacitor C27 and the second diode D27 but also a second resistor R27 as well. In each of the plurality of second bootstrap circuits 72, the anode of the second diode D27 is connected to the positive-side terminal of the power supply unit 9 via the third diode D37. In each of the plurality of second bootstrap circuits 72, the cathode of the second diode D27 is connected to a first end of the second capacitor C27 via the second resistor R27. The first end of the second capacitor C27 is connected to a higher-potential power supply terminal 62H (refer to FIG. 3) of the second gate driver 62. A second end of the second capacitor C27 is connected to a lower-potential power supply terminal 62L (refer to FIG. 3) of the second gate driver 62. The second bootstrap circuit 72 supplies, to the second gate driver 62, a voltage required for the second gate driver 62 to turn ON the second switching element Q2 (i.e., a voltage greater than a threshold voltage of the second switching element Q2). Each of the plurality of second bootstrap circuits 72 further includes a second Zener diode Z27 connected to the second capacitor C27 in parallel. In each of the plurality of second bootstrap circuits 72, the cathode of the second Zener diode Z27 is connected to the first end of the second capacitor C27 and the anode of the second Zener diode Z27 is connected to the second end of the second capacitor C27.

Each of the plurality of third bootstrap circuits 73 supplies voltage to a corresponding one of the plurality of third gate drivers 63. Each of the plurality of third bootstrap circuits 73 includes not only the third capacitor C37 and the third diode D37 but also a third resistor R37 as well. In each of the plurality of third bootstrap circuits 73, the anode of the third diode D37 is connected to the positive-side terminal of the power supply unit 9. In each of the plurality of third bootstrap circuits 73, the cathode of the third diode D37 is connected to a first end of the third capacitor C37 via the third resistor R37. The first end of the third capacitor C37 is connected to a higher-potential power supply terminal 63H (refer to FIG. 3) of the third gate driver 63. A second end of the third capacitor C37 is connected to a lower-potential power supply terminal 63L (refer to FIG. 3) of the third gate driver 63. The third bootstrap circuit 73 supplies, to the third gate driver 63, a voltage required for the third gate driver 63 to turn ON the third switching element Q3 (i.e., a voltage greater than a threshold voltage of the third switching element Q2). Each of the plurality of third bootstrap circuits 73 further includes a third Zener diode Z37 connected to the third capacitor C37 in parallel. In each of the plurality of third bootstrap circuits 73, the cathode of the third Zener diode Z37 is connected to the first end of the third capacitor C37 and the anode of the third Zener diode Z37 is connected to the second end of the third capacitor C37.

The power supply unit 9 may be, for example, a DC power supply including an insulating DC-DC converter 91. The positive-side terminal of the power supply unit 9 is connected to the higher-potential power supply terminal 64H (refer to FIG. 3) of each of the plurality of fourth gate drivers 64. The positive-side terminal of the power supply unit 9 is connected to the first end of the third capacitor C37 via the third diode D37 and the third transistor R37. The positive-side terminal of the power supply unit 9 is also connected to the first end of the second capacitor C27 via the third diode D37, the second diode D27, and the second resistor R27. Furthermore, the positive-side terminal of the power supply unit 9 is further connected to the first end of the first capacitor C17 via the third diode D37, the second diode D27, the first diode D17, and the first resistor R17. The negative-side terminal of the power supply unit 9 is connected to the lower-potential power supply terminal 64L (refer to FIG. 3) of each of the plurality of fourth gate drivers 64. In addition, the negative-side terminal of the power supply unit 9 is connected to the negative electrode N1 of the DC power supply 3.

The control unit 60 controls the plurality of first gate drivers 61, the plurality of second gate drivers 62, the plurality of third gate drivers 63, and the plurality of fourth gate drivers 64. This allows the control unit 60 to control the plurality of first switching elements Q1, the plurality of second switching elements Q2, the plurality of third switching elements Q3, and the plurality of fourth switching elements Q4. The agent that performs the functions of the control unit 60 includes a computer system. The computer system includes a single or a plurality of computers. The computer system includes a processor and a memory as principal hardware components thereof. The computer system serves as the agent that performs the functions of the control unit 60 according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The control unit 60 outputs a plurality of (three) first control signals S1 (refer to FIG. 2) for controlling the plurality of (three) first switching elements Q1. The control unit 60 also outputs a plurality of (three) second control signals S2 (refer to FIG. 2) for controlling the plurality of (three) second switching elements Q2. The control unit 60 further outputs a plurality of (three) third control signals S3 (refer to FIG. 2) for controlling the plurality of third switching elements Q3. The control unit 60 further outputs a plurality of (three) fourth control signals S4 for controlling the plurality of (three) fourth switching elements Q4. Note that in FIG. 2, only one of the three inverter circuits 1 (refer to FIG. 1) is shown with illustration of the other two inverter circuits 1 omitted. Also, in FIG. 2, illustration of the plurality of first gate drivers 61, the plurality of second gate drivers 62, the plurality of third gate drivers 63, the plurality of fourth gate drivers 64, the plurality of first bootstrap circuits 71, the plurality of second bootstrap circuits 72, the plurality of third bootstrap circuits 73, and the power supply unit 9 that are shown in FIG. 1 is omitted. Furthermore, in FIG. 3, only one of the three inverter circuits 1 (refer to FIG. 1) is shown with illustration of the other two inverter circuits 1 omitted. Also, in FIG. 3, illustration of the other two first gate drivers 61, the other two second gate drivers 62, the other two third gate drivers 63, the other two fourth gate drivers 64, the other two first bootstrap circuits 71, the other two second bootstrap circuits 72, and the other two third bootstrap circuits 73 that are shown in FIG. 1 is omitted.

The three first control signals S1 are a first control signal S1U for controlling the first switching element Q1 of the switching circuit 10U, a first control signal S1V for controlling the first switching element Q1 of the switching circuit 10V, and a first control signal S1W for controlling the first switching element Q1 of the switching circuit 10W.

The three second control signals S2 are a second control signal S2U for controlling the second switching element Q2 of the switching circuit 10U, a second control signal S2V for controlling the second switching element Q2 of the switching circuit 10V, and a second control signal S2W for controlling the second switching element Q2 of the switching circuit 10W.

The three third control signals S3 are a third control signal S3U for controlling the third switching element Q3 of the switching circuit 10U, a third control signal S3V for controlling the third switching element Q3 of the switching circuit 10V, and a third control signal S3W for controlling the third switching element Q3 of the switching circuit 10W.

The three fourth control signals S4 are a fourth control signal S4U for controlling the fourth switching element Q4 of the switching circuit 10U, a fourth control signal S4V for controlling the fourth switching element Q4 of the switching circuit 10V, and a fourth control signal S4W for controlling the fourth switching element Q4 of the switching circuit 10W.

Each of the plurality of first control signals S1, the plurality of second control signals S2, the plurality of third control signals S3, and the plurality of fourth control signals S4 may be, for example, a signal having a potential level that alternates between a first potential level (hereinafter referred to as a "low level") and a second potential level (hereinafter referred to as a "high level") higher than the first potential level.

The first potential level may be 0 V, for example, and the second potential level is a potential level higher than a gate threshold voltage of the IGBT. That is to say, in each of the plurality of control signals (namely, the plurality of first control signals S1, the plurality of second control signals S2, the plurality of third control signals S3, and the plurality of fourth control signals S4), the first potential level is a potential level for allowing the switching element associated with the control signal to be in OFF state and the second potential level is a potential level for allowing the switching element associated with the control signal to be in ON state.

Each of the plurality of first switching elements Q1 is ON when its associated first control signal S1 has high level and is OFF when its associated first control signal S1 has low level. Each of the plurality of second switching elements Q2 is ON when its associated second control signal S2 has high level and is OFF when its associated second control signal S2 has low level. Each of the plurality of third switching elements Q3 is ON when its associated third control signal S3 has high level and is OFF when its associated third control signal S3 has low level. Each of the plurality of fourth switching elements Q4 is ON when its associated fourth control signal S4 has high level and is OFF when its associated fourth control signal S4 has low level.

(3) Operation of multi-level inverter

The control unit 60 performs, as its operation while the multi-level inverter 100 is being booted, a charging control operation of charging the plurality of first capacitors C17, the plurality of second capacitors C27, and the plurality of third capacitors C37 with electricity and also performs, as a steady-state operation of the multi-level inverter 100, an inverter control operation for causing an output current to flow through each of the plurality of output terminals 41.

In the following description, it will be described how the multi-level inverter 100 operates when the control unit 60 performs the inverter control operation. After that, it will be described how the multi-level inverter 100 operates when the control unit 60 performs the charging control operation.

(3.1) Operation of multi-level inverter when control unit performs inverter control operation

In the multi-level inverter 100, each of the plurality of inverter circuits 1 is controlled toward one of a first switching state, a second switching state, or a third switching state. That is to say, in the multi-level inverter 100, in each of the three inverter circuits 1U, 1V, 1W, the switching state of the switching circuit 10 thereof is controlled toward any one of the first, second, and third switching states. The first, second, and third switching states are different from each other in the combination of the ON/OFF states of the first to fourth switching elements Q1-Q4. In each of the plurality of inverter circuits 1, its output voltage in the first switching state, its output voltage in the second switching state, and its output voltage in the third switching state are different from each other. That is to say, in each of the plurality of inverter circuits 1, the potential level of the output voltage changes in three levels according to the states of the first to fourth switching elements Q1-Q4. Note that as for the output voltages of the plurality of inverter circuits 1, the output voltage of the U-phase inverter circuit 1U, the output voltage of the V-phase inverter circuit 1V, and the output voltage of the W-phase inverter circuit 1W have mutually different phases.

The first switching state herein refers to a combination of ON/OFF states where the first switching element Q1 and the second switching element Q2 are both ON and the third switching element Q3 and the fourth switching element Q4 are both OFF. When controlled toward the first switching state, each of the plurality of inverter circuits 1 may deliver an output voltage, of which the potential level is as high as the potential level at the positive electrode P1 of the DC power supply 3. In each of the plurality of inverter circuits 1 in the first switching state, the potential at the third connection node 13 is as high as the potential level (e.g., Vdc/2) at the positive electrode P1 of the DC power supply 3.

The second switching state herein refers to a combination of ON/OFF states where the first switching element Q1 and the fourth switching element Q4 are both OFF and the second switching element Q2 and the third switching element Q3 are both ON. When controlled toward the second switching state, each of the plurality of inverter circuits 1 may deliver an output voltage, of which the potential level is as high as the potential level at the intermediate potential node M1 of the DC power supply 3. In each of the plurality of inverter circuits 1 in the second switching state, the potential at the third connection node 13 is as high as the potential level (e.g., 0) at the intermediate potential node M1.

The third switching state herein refers to a combination of ON/OFF states where the first switching element Q1 and the second switching element Q2 are both OFF and the third switching element Q3 and the fourth switching element Q4 are both ON. When controlled toward the third switching state, each of the plurality of inverter circuits 1 may deliver an output voltage, of which the potential level is as high as the potential level at the negative electrode N1 of the DC power supply 3. In each of the plurality of inverter circuits 1 in the third switching state, the potential at the third connection node 13 is as high as the potential level (e.g., -Vdc/2) at the negative electrode N1 of the DC power supply 3.

FIG. 2 illustrates a current path in a situation where a switching circuit 10 of the multi-level inverter 100 according to the exemplary embodiment is in the first switching state. When the switching circuit 10 of one inverter circuit 1 is in the first switching state, a current I1 flows along a path that passes through the positive electrode P1 of the DC power supply 3, the first switching element Q1, the second switching element Q2, the third connection node 13, and the output terminal 41 in this order as shown in FIG. 2 to make the voltage value of the output voltage for the AC load RA1 (refer to FIG. 1) approximately equal to Vdc/2.

In addition, when the switching circuit 10 of the inverter circuit 1 is in the first switching state, a voltage required for the first gate driver 61 to turn ON the first switching element Q1 is supplied from the first capacitor C17 of the first bootstrap circuit 71 to the first gate driver 61. Thus, electricity is discharged from the first capacitor C17 of the first bootstrap circuit 71 through a first discharging path Ru1 shown in FIG. 3. The first discharging path Ru1 passes through the first capacitor C17, the higher-potential power supply terminal 61H of the first gate driver 61, the lower-potential power supply terminal 61L of the first gate driver 61, and the first capacitor C17 in this order. Discharging electricity from the first capacitor C17 causes, in the first bootstrap circuit 71, the voltage Vo1 across the first capacitor C17 to fall with the passage of time.

Furthermore, when the switching circuit 10 of the inverter circuit 1 is in the first switching state, a voltage required for the second gate driver 62 to turn ON the second switching element Q2 is supplied from the capacitor C27 of the second bootstrap circuit 72 to the second gate driver 62. Thus, electricity is discharged from the second capacitor C27 through a second discharging path Ru2 shown in FIG. 3. The second discharging path Ru2 passes through the second capacitor C27, the higher-potential power supply terminal 62H of the second gate driver 62, the lower-potential power supply terminal 62L of the second gate driver 62, and the second capacitor C27 in this order. Discharging electricity from the first capacitor C17 causes, in the second bootstrap circuit 72, the voltage Vo2 across the second capacitor C27 to fall with the passage of time.

FIG. 3 illustrates a discharging path and charging path in the situation where the switching circuit 10 of the multi-level inverter 100 according to the exemplary embodiment is in the first switching state. When the switching circuit 10 of the inverter circuit 1 is in the first switching state, the first capacitor C17 is charged with the electric charges supplied from the second capacitor C27 if a first condition is satisfied. If the voltage across the first diode D17 is Vd1, the voltage across the first resistor R17 is VR1, and the voltage across the second switching element Q2 is Vf2 as shown in FIG. 3, the first condition is Vo2 > (Vo1 + Vd1 + VR1 + Vf2). The charging path Ru21 for charging the first capacitor C17 with the electric charges supplied from the second capacitor C27 is a path that passes through the second capacitor C27, the second resistor R27, the first diode D17, the first resistor R17, the first capacitor C17, the first connection node 11, the second switching element Q2, and the second capacitor C27 in this order.

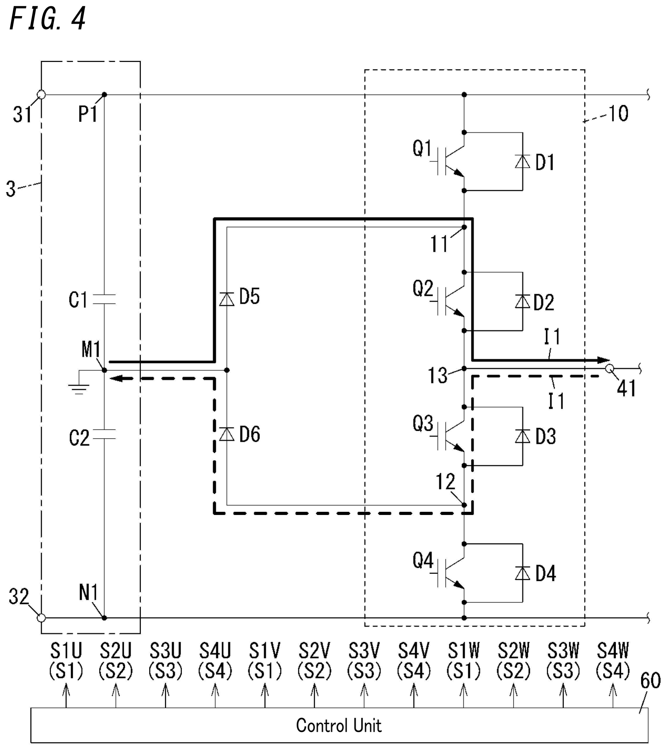

FIG. 4 illustrates a current path in a situation where the switching circuit 10 of the multi-level inverter 100 according to the exemplary embodiment is in a second switching state. When the switching circuit 10 of the inverter circuit 1 is in the second switching state and the polarity of the output current is positive, a current I1 flows along the path (i.e., the path indicated by the bold solid-line arrow) that passes through the intermediate potential node M1 of the DC power supply 3, the first clamping diode D5, the second switching element Q2, the third connection node 13, and the output terminal 41 in this order as shown in FIG. 4, to make the voltage value of the output voltage for the AC load RA1 equal to zero. More specifically, when the switching circuits 10U, 10V, and 10W are in the second switching state, the third switching state, and the third switching state, respectively, the current I1 flows along the path that passes through the intermediate potential node M1 of the DC power supply 3, the first clamping diode D5 of the inverter circuit 1U, the second switching element Q2 of the switching circuit 10U, the third connection node 13, and the output terminal 41 in this order.

Alternatively, when the switching circuit 10 of the inverter circuit 1 is in the second switching state and the polarity of the output current is negative, a current I1 may also flow through the path that passes through, for example, the output terminal 41, the third connection node 13, the third switching element Q3, the second connection node 12, and the second clamping diode D6 in this order (i.e., the path indicated by the bold dashed-line arrow) as shown in FIG. 4, to make the voltage value of the output voltage for the AC load RA1 equal to zero. More specifically, when the switching circuits 10U, 10V, and 10W are in the second switching state, the second switching state, and the first switching state, respectively, the current I1 flows along the path that passes through the output terminal 41 of the inverter circuit 1U, the third connection node 13, the third switching element Q3, the second connection node 12, and the second clamping diode D6 in this order to make the voltage value of the output voltage for the AC load RA1 equal to zero.

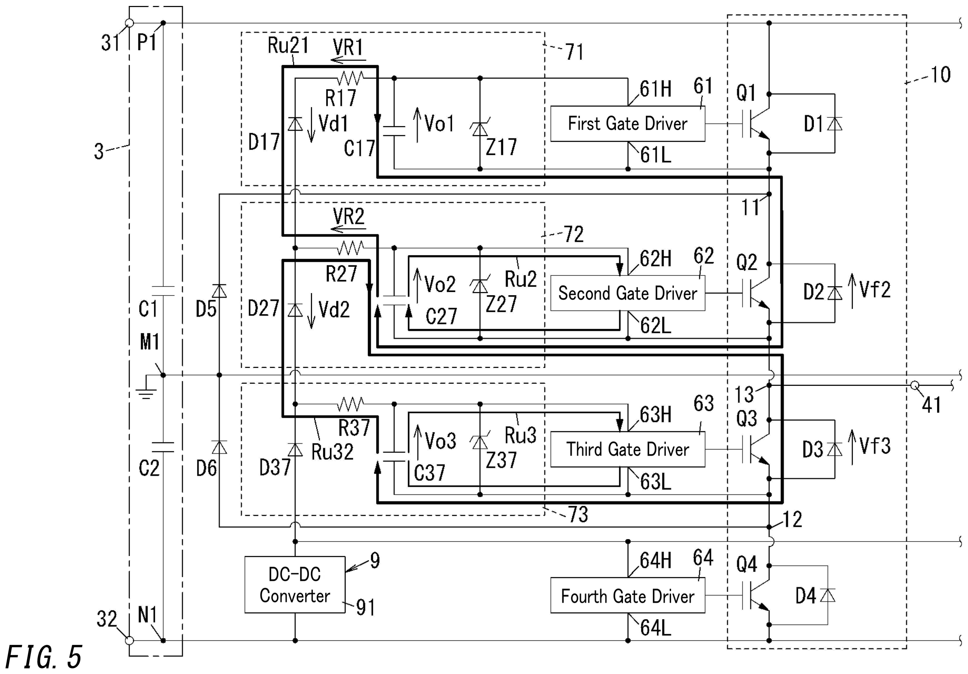

FIG. 5 illustrates a discharging path and a charging path in the situation where the switching circuit 10 of the multi-level inverter 100 according to the exemplary embodiment is in the second switching state. Furthermore, when the switching circuit 10 of the inverter circuit 1 is in the second switching state, a voltage required for the second gate driver 62 to turn ON the second switching element Q2 is supplied from the second capacitor C27 of the second bootstrap circuit 72 to the second gate driver 62. Thus, electricity is discharged from the second capacitor C27 through the second discharging path Ru2 shown in FIG. 5. The second discharging path Ru2 passes through the second capacitor C27, the higher-potential power supply terminal 62H of the second gate driver 62, the lower-potential power supply terminal 62L of the second gate driver 62, and the second capacitor C27 in this order. Discharging electricity from the second capacitor C27 causes, in the second bootstrap circuit 72, the voltage Vo2 across the second capacitor C27 to fall with the passage of time.

In addition, when the switching circuit 10 of the inverter circuit 1 is in the second switching state, a voltage required for the third gate driver 63 to turn ON the third switching element Q3 is supplied from the third capacitor C37 of the third bootstrap circuit 73 to the third gate driver 63. Thus, electricity is discharged from the third capacitor C37 through the third discharging path Ru3 shown in FIG. 5. The third discharging path Ru3 passes through the third capacitor C37, the higher-potential power supply terminal 63H of the third gate driver 63, the lower-potential power supply terminal 63L of the third gate driver 63, and the third capacitor C37 in this order. Discharging electricity from the third capacitor C37 causes, in the third bootstrap circuit 73, the voltage Vo3 across the third capacitor C37 to fall with the passage of time.

Furthermore, when the switching circuit 10 of the inverter circuit 1 is in the second switching state, the second capacitor C27 is charged with electric charges supplied from the third capacitor C37 if a second condition is satisfied and the first capacitor C17 is charged with electric charges supplied from the second capacitor C27 if a third condition is satisfied. If the voltages across the first diode D17 and the second diode D27 are Vd1 and Vd2, respectively, the voltages across the first resistor R17 and the second resistor R27 are VR1, VR2, respectively, and the voltages across the second switching element Q2 and the third switching element Q3 are Vf2, Vf3, respectively, as shown in FIG. 5, the second condition is Vo3 > (Vo2 + Vd2 + VR2 + Vf3). The third condition is Vo2 > (Vo1 + Vd1 + VR1 + Vf2). The charging path Ru32 for charging the second capacitor C27 with the electric charges supplied from the third capacitor C37 is a path that passes through the third capacitor C37, the third resistor R37, the second diode D27, the second resistor R27, the second capacitor C27, the third connection node 13, the third switching element Q3, and the third capacitor C37 in this order. The charging path Ru21 for charging the first capacitor C17 with the electric charges supplied from the second capacitor C27 is a path that passes through the second capacitor C27, the second resistor R27, the first diode D17, the first resistor R17, the first capacitor C17, the first connection node 11, the second switching element Q2, and the second capacitor C27 in this order.

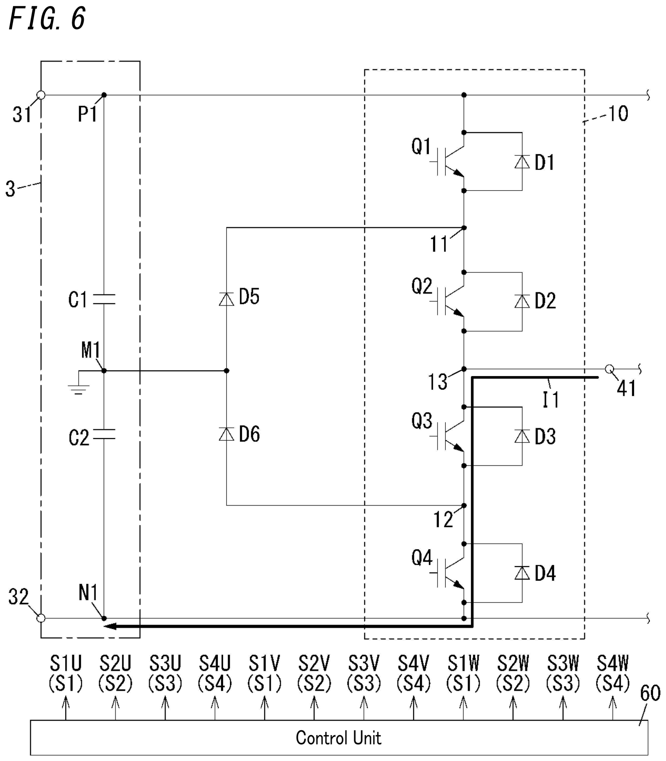

FIG. 6 illustrates a current path in a situation where the switching circuit 10 of the multi-level inverter 100 according to the exemplary embodiment is in a third switching state. When the switching circuit 10 of the inverter circuit 1 is in the third switching state, a current I1 flows along the path that passes through the output terminal 41, the third connection node 13, the third switching element Q3, the fourth switching element Q4, and the negative electrode N1 of the DC power supply 3 in this order as shown in FIG. 6 to make the voltage value of the output voltage for the AC load RA1 equal to -Vdc/2.

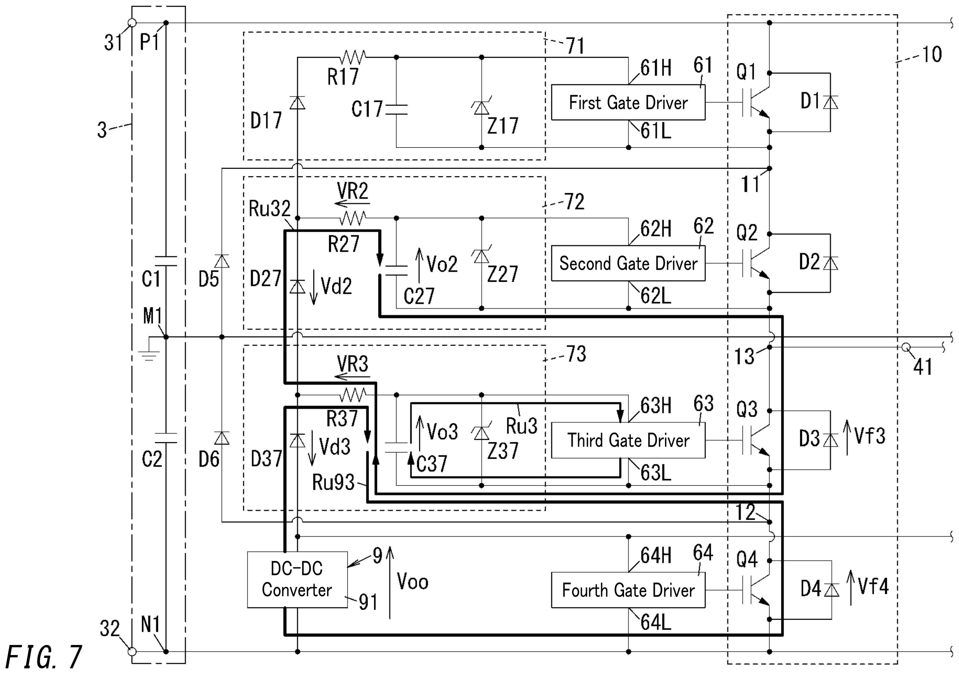

FIG. 7 illustrates a discharging path and a charging path in the situation where the switching circuit 10 of the multi-level inverter 100 according to the exemplary embodiment is in the third switching state. When the switching circuit 10 of the inverter circuit 1 is in the third switching state, the second capacitor C27 of the second bootstrap circuit 72 (refer to FIG. 1) is charged with electric charges supplied from the third capacitor C37, and therefore, the voltage Vo2 across the second capacitor C27 rises with the passage of time to eventually make the second capacitor C27 fully charged. Furthermore, when the switching circuit 10 of the inverter circuit 1 is in the third switching state, a voltage required for the third gate driver 63 to turn ON the third switching element Q3 is supplied from the third capacitor C37 of the third bootstrap circuit 73 to the third gate driver 63. Thus, electricity is discharged from the third capacitor C37 through a discharging path Ru3 shown in FIG. 7. The discharging path Ru3 passes through the third capacitor C37, the higher-potential power supply terminal 63H of the third gate driver 63, the lower-potential power supply terminal 63L of the third gate driver 63, and the capacitor C37 in this order. Furthermore, when the switching circuit 10 of the inverter circuit 1 is in the third switching state, the third capacitor C37 is charged with electricity supplied from the power supply unit 9 if a fourth condition is satisfied and the second capacitor C27 is charged with electric charges supplied from the third capacitor C37 if a fifth condition is satisfied. If the voltage across the power supply unit 9 is Voo, the voltages across the second diode D27 and the third diode D37 are Vd2 and Vd3, respectively, the voltages across the second resistor R27 and the third resistor R37 are VR2 and VR3, respectively, and the voltages across the third switching element Q3 and the fourth switching element Q4 are Vf3 and Vf4, respectively, as shown in FIG. 7, the fourth condition is Voo > (Vo3 + Vd3 + VR3 + Vf4) and the fifth condition is Vo3 > (Vo2 + Vd2 + VR2 + Vf3). The charging path Ru93 for charging the third capacitor C37 with the electricity supplied from the power supply unit 9 is a path that passes through the positive-side terminal of the power supply unit 9, the third diode D37, the third resistor R37, the third capacitor C37, the second connection node 12, the fourth switching element Q4, and the negative-side terminal of the power supply unit 9 in this order. The charging path Ru32 for charging the second capacitor C27 with the electric charges supplied from the third capacitor C37 is a path that passes through the third capacitor C37, the third resistor R37, the second diode D27, the second resistor R27, the second capacitor C27, the third connection node 13, the third switching element Q3, and the third capacitor C37 in this order.

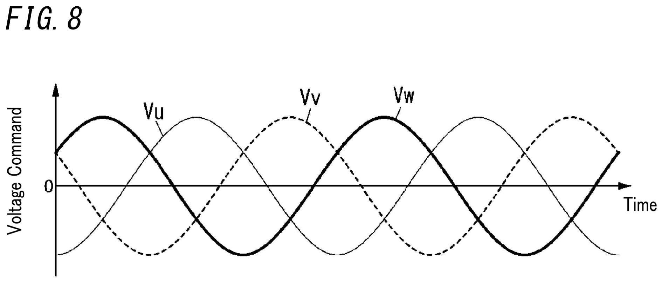

The controller 60 generates, in accordance with voltage commands Vu (refer to FIG. 8) about the output voltage of the inverter circuit 1U, first to fourth control signals S1-S4 (S1US4U), respectively, for the first to fourth switching elements Q1-Q4 of the inverter circuit 1U. The controller 60 also generates, in accordance with voltage commands Vv (refer to FIG. 8) about the output voltage of the inverter circuit 1V, first to fourth control signals S1-S4 (S1V-S4V), respectively, for the first to fourth switching elements Q1-Q4 of the inverter circuit 1V. The controller 60 further generates, in accordance with voltage commands Vw (refer to FIG. 8) about the output voltage of the inverter circuit 1W, first to fourth control signals S1-S4 (S1W-S4W), respectively, for the first to fourth switching elements Q1-Q4 of the inverter circuit 1W.

FIG. 8 shows voltage command values for respective phases in the multi-level inverter 100 according to the exemplary embodiment. As shown in FIG. 8, voltage commands Vu and Vv are sinusoidal wave signals, of which the phases are different from each other by 120 degrees, for example, and have values (voltage command values) that change with time. Note that the voltage commands Vu, Vv, Vw each have one cycle of the same length. Optionally, the control unit 60 may perform proportional-integral (PI) control on the voltage commands Vu, Vv, Vw in accordance with the information provided by a detection unit 8 for detecting the state of the AC load RA1. If the AC load RA1 is a three-phase servo motor, the information provided by the detection unit 8 includes, for example, information about detection results obtained by a plurality of current sensors for detecting output currents flowing through the U-, V- and W-phases of the AC load RA1 and/or information about the detection results obtained by an encoder for detecting the number of revolutions, the rotational angle, and other parameters of the three-phase servo motor.

In the following description, it will be described how one of the three inverter circuits 1 (e.g., the U-phase inverter circuit 1U) operates. The V-phase inverter circuit 1V and the W-phase inverter circuit 1W operate in the same way as the U-phase inverter circuit 1U. The respective output voltages of the U-phase inverter circuit 1U, the V-phase inverter circuit 1V, and the W-phase inverter circuit 1W have mutually different phases.

The control unit 60 controls the plurality of first gate drivers 61, the plurality of second gate drivers 62, the plurality of third gate drivers 63, and the plurality of fourth gate drivers 64 by performing voltage vector control.

Next, it will be described in further detail how the control unit 60 performs the voltage vector control.

The control unit 60 stores, in advance, one group of voltage vectors. Each of the one group of voltage vectors is defined by a combination of respective potential levels at connection nodes (third connection nodes 13), at each of which the second switching element Q2 and the third switching element Q3 are connected to each other in a corresponding one of the plurality of inverter circuits 1. In other words, the one group of voltage vectors is each defined by the switching state of the switching circuit 10U corresponding to the U-phase, the switching state of the switching circuit 10V corresponding to the V-phase, and the switching state of the switching circuit 10W corresponding to the W-phase. The number of voltage vectors included in one group of voltage vectors is $3^3$ (= 27).

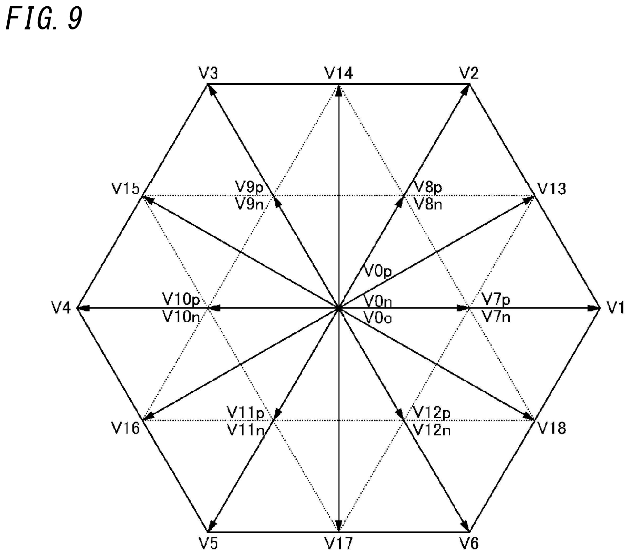

FIG. 9 illustrates one group of voltage vectors with respect to the multi-level inverter 100 according to the exemplary embodiment. As shown in FIG. 9, the one group of voltage vectors includes three zero vectors V0p, V0n, and V0o, each of which has a magnitude of zero. In addition, the one group of voltage vectors further includes six voltage vectors V1, V2, V3, V4, V5, and V6, each of which has a magnitude of $(2/3)^{1/2} \cdot 2\text{Vdc}$ and which have mutually different directions. Furthermore, the one group of voltage vectors further includes twelve voltage vectors V7p, V7n, V8p, V8n, V9p, V9n, V10p, V10n, V11p, V11n, V12p, and V12n, each of which has a magnitude of $(2/3)^{1/2} \cdot \text{Vdc}$. Besides, the one group of voltage vectors further includes six voltage vectors V13, V14, V15, V16, V17, and V18, each of which has a magnitude of $(2/3)^{1/2} \cdot 3^{1/2} \cdot \text{Vdc}$ and which have mutually different directions. In FIG. 9, the angle formed between each pair of adjacent voltage vectors belonging to the six voltage vectors V1, V2, V3, V4, V5, and V6 is 60 degrees. In the same way, the angle formed between each pair of adjacent voltage vectors belonging to the six voltage vectors V13, V14, V15, V16, V17, and V18 is also 60 degrees. Note that FIG. 9 is a vector diagram in which the one group of voltage vectors are plotted on an orthogonal d-q coordinate system.

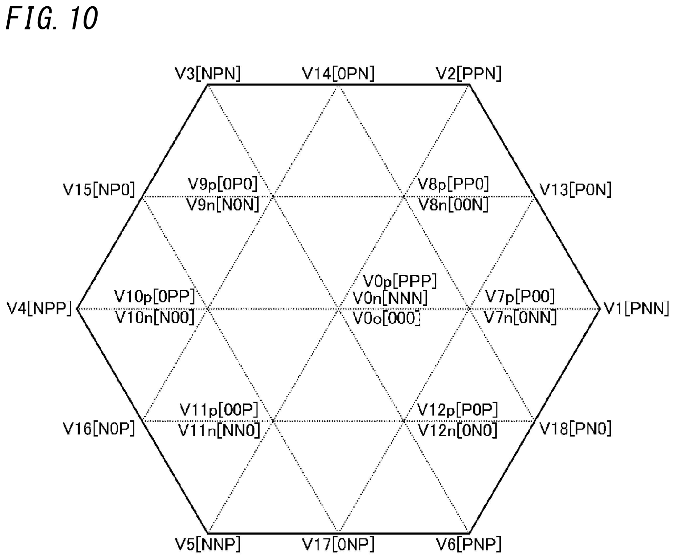

The one group of voltage vectors may be each expressed as shown in FIG. 10 if their first, second, and third switching states are designated by the reference signs "P," "0," and "N," respectively, and the respective switching states of the three phases are arranged in the order of U-, V, and W-phases.

FIG. 10 illustrates the one group of voltage vectors more specifically with respect to the multi-level inverter 100 according to the exemplary embodiment. As shown in FIG. 10, the three zero vectors V0p, V0n, and V0o may be expressed as V0p[PPP], V0n[NNN], and V0o[000], respectively. For example, V0p[PPP] indicates that regarding the zero vector V0p, the switching state of the U-phase switching circuit 10U is "P," the switching state of the V-phase switching circuit 10V is "P," and the switching state of the W-phase switching circuit 10W is "P." A voltage vector with the suffix "p" such as V10p includes "P" but does not include "N." The same statement will apply to the rest of the description. A voltage vector with the suffix "n" such as V10n includes "N" but does not include "P" as its switching state. The same statement will apply to the rest of the description. A voltage vector with the suffix "o" such as V10o includes "0" but includes neither "P" nor "N." If the switching state of a switching circuit 10 is "P," then the potential at the third connection node 13 of the switching circuit 10 will be the potential at the positive electrode P1 of the DC power supply 3. If the switching state of a switching circuit 10 is "N," then the potential at the third connection node 13 of the switching circuit 10 will be the potential at the negative electrode N1 of the DC power supply 3. If the switching state of a switching circuit 10 is "0," then the potential at the third connection node 13 of the switching circuit 10 will be the potential at the intermediate potential node M1 of the DC power supply 3.

The six voltage vectors V1, V2, V3, V4, V5, and V6 may be expressed as V1[PNN], V2[PPN], V3[NPN], V4[NPP], V5[NNP], and V6[PNP], respectively. A voltage vector with none of the suffixes "p," "n," and "o" added to the numeral following "V" such as V1[PNN], V2[PPN], V3[NPN], V4[NPP], V5[NNP], and V6[PNP] includes "P" and "N" as two out of the three-phase switching states.

The twelve voltage vectors V7p, V7n, V8p, V8n, V9p, V9n, V10p, V10n, V11p, V11n, V12p, and V12n may be expressed as V7p[P00], V7n[0NN], V8p[PP0], V8n[00N], V9p[0P0], V9n[N0N], V10p[0PP], V10n[N00], V11p[00P], V11n[NN0], V12p[P0P], and V12n[0N0], respectively.

The six voltage vectors V13, V14, V15, V16, V17, and V18 may be expressed as V13[P0N], V14[0PN], V15[NP0], V16[N0P], V17[0NP], and V18[PN0], respectively.

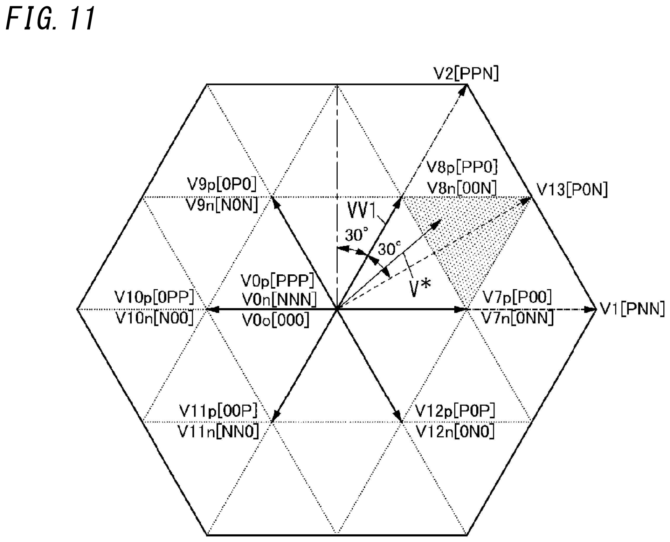

FIG. 11 is a vector diagram illustrating how the control unit 60 operates in the multi-level inverter 100 according to the exemplary embodiment. The control unit 60 transforms the instantaneous value of the command voltage with respect to the output voltage of each of the plurality of inverter circuits 1 into a command voltage vector V* (refer to FIG. 11). If the d-axis component of the command voltage vector V* on the orthogonal d-q coordinate system is Vd and the q-axis component of the command voltage vector V* on the orthogonal d-q coordinate system is Vq, then the command voltage vector V* may be given by the following Equation (1):

[Mathematical Expression 1]

$$ V^* = \begin{bmatrix} V_d \\ V_q \end{bmatrix} = \sqrt{\frac{2}{3}} \cdot \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} V_u \\ V_v \\ V_w \end{bmatrix} \qquad \text{Equation (1)} $$

The control unit 60 selects a plurality of (e.g., five) voltage vectors located adjacent to the command voltage vector V* which belong to the one group of voltage vectors. In the example shown in FIG. 11, the plurality of voltage vectors are V8p[PP0], V8n[00N], V13[P0N], V7p[P00], and V7n[0NN].

The angle formed between the voltage vector (hereinafter referred to as a "voltage vector VV1") located closest to the command voltage vector V* and the command voltage vector V* is smaller than 30 degrees.

The control unit 60 conforms a synthetic vector of three vectors at the three vertices of an equilateral triangle surrounding the command voltage vector V* to the command voltage vector V* within a predetermined control cycle Ts. Specifically, the control unit 60 conforms a synthetic vector of the voltage vectors VV1 (e.g., the voltage vector V8p[PP0] and the voltage vector V8n[00N] in the example shown in FIG. 11), the voltage vector V13[P0N], and the voltage vector V7p[P00] and the voltage vector V7n[0NN] to the command voltage vector V*. The control cycle Ts is one cycle of a carrier signal. In the control unit 60, in two voltage vectors arranged in line along the time series, the switching state of only one phase out of the U-, V-, and W-phases changes either between "P" and "0" or between "0" and "N" and the same voltage vector is output twice apiece within the control cycle Ts.

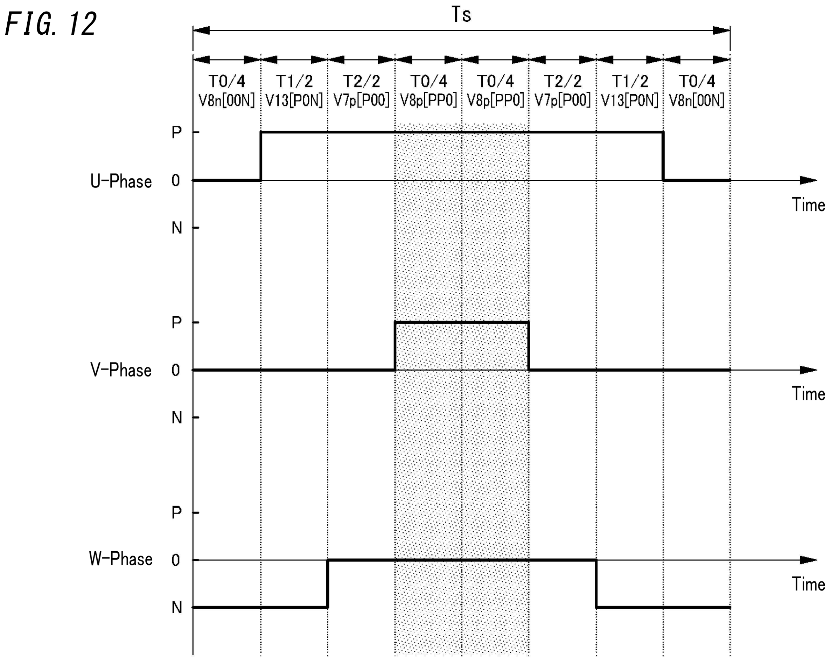

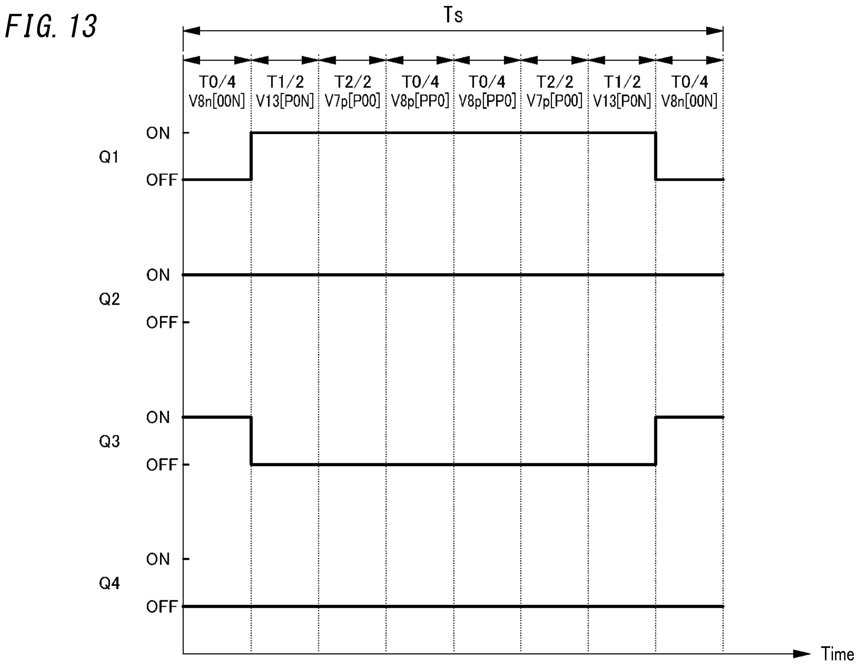

FIG. 12 is a timing chart showing switching states in respective phases of the multi-level inverter 100 according to the exemplary embodiment. FIG. 13 is a timing chart illustrating the ON/OFF states of the first to fourth switching elements Q1-Q4 of the multi-level inverter 100 according to the exemplary embodiment. Specifically, in FIG. 12, voltage vectors are output in the order of the voltage vector V8n[00N], the voltage vector V13[P0N], the voltage vector V7p[P00], the voltage vector V8p[PP0], the voltage vector V8p[PP0], the voltage vector V7p[P00], the voltage vector V13[P0N], and the voltage vector V8n[00N]. In the example shown in FIG. 12, the time assigned out of the control cycle Ts to the voltage vectors V8p and V8n is T0, the time assigned to the voltage vectors V13 is T1, and the time assigned to the voltage vectors V7p and V7n is T2. As for T0, T1, and T2, supposing the voltage vectors at the three vertices of an equilateral triangle surrounding the command voltage vector V* are Va, Vb, and Vc, respectively, the magnitude of the command voltage vector V* is V, and the angle is θ, the control unit 60 determines T0, T1, and T2 to satisfy the following Equations (2) and (3). In Equation (2), "j" represents an imaginary unit. Note that in the example shown in FIG. 11, the voltage vectors Va may be, for example, the voltage vectors V8p[PP0] and V8n[00N], the voltage vector Vb may be the voltage vector V13[P0N], and the voltage vectors Vc may be the voltage vectors V7p[P00] and V7n[0NN].

[Mathematical Expression 2]

$$Va \cdot T0 + Vb \cdot T1 + Vc \cdot T2$$
$$= V \cdot Ts \cdot \cos\theta + j\, V \cdot Ts \cdot \sin\theta$$

Equation (2)

[Mathematical Expression 3]

$$T0 + T1 + T2 = Ts$$

Equation (3)

In the example shown in FIG. 12, the first switching element Q1, the second switching element Q2, the third switching element Q3, and the fourth switching element Q4 are turned ON and OFF within one control cycle Ts as shown in FIG. 13.

Note that even if the command voltage vector V* is the same as the one shown in FIG. 11, the voltage vectors may be output in a different order within one control cycle Ts according to the initial value of the carrier signal at the beginning of the control cycle Ts.

(3.2) Operation of multi-level inverter when control unit performs initial charging control as its operation during booting

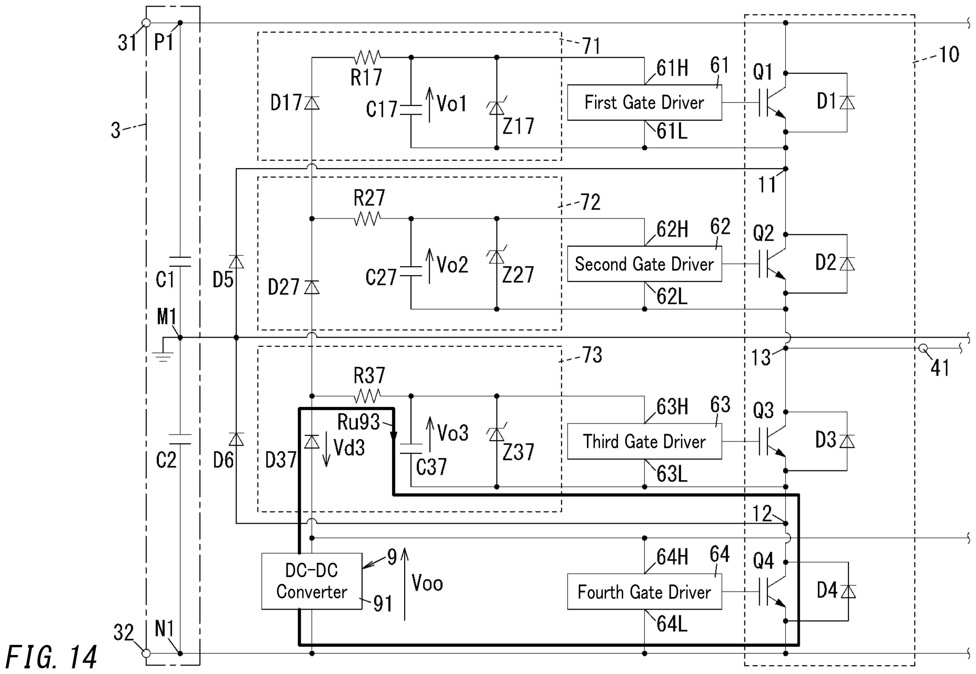

The control unit 60 has the function of performing initial charging control of making initial charging of the plurality of first capacitors C17, the plurality of second capacitors C27, and the plurality of third capacitors C37 while the multi-level inverter 100 is being booted. In the following description, it will be described with reference to FIGS. 14-17 how the control unit 60 operates when performing the initial charging control.

In the multi-level inverter 100, when the DC voltage source E1 is connected between the positive electrode P1 and negative electrode N1 of the DC power supply 3 while the multi-level inverter 100 is being booted, the potential at the intermediate potential node M1 of the DC power supply 3 increases to Vdc/2 transiently. As used herein, the expression "the DC voltage source E1 is connected between the positive electrode P1 and negative electrode N1 of the DC power supply 3" means that the output voltage Vdc of the DC voltage source E1 is applied (i.e., power is supplied) to between the positive electrode P1 and negative electrode N1 of the DC power supply 3. For example, after the DC voltage source E1 has been connected to the multi-level inverter 100, the control unit 60 instructs the DC-DC converter 91 included in the power supply unit 9 to start to operate. The control unit 60 performs the charging control operation when the time it takes for the potential at the intermediate potential node M1 to increase to Vdc/2 has passed since the DC voltage source E1 was connected to between the positive electrode P1 and negative electrode N1 of the DC power supply 3, for example. Optionally, the control unit 60 may be configured to monitor the potential at the intermediate potential node M1 of the DC power supply 3 and perform the charging control operation after the potential at the intermediate potential node M1 has increased to Vdc/2.

When performing the initial charging control, the control unit 60 charges the plurality of third capacitors C37 and the plurality of second capacitors C27 with electricity and then charges the plurality of first capacitors C17 with electricity. Thus, when performing the initial charging control, the control unit 60 performs the control (first control) of allowing only the third switching element Q3 and the fourth switching element Q4 to be ON after having turned ON only the fourth switching element Q4 in each of the plurality of switching circuits 10 and then alternately performs the control (third control) of allowing only the second switching element Q2 and the third switching element Q3 to be ON and the control (fourth control) of allowing only the third switching element Q3 and the fourth switching element Q4 to be ON. As used herein, the phrase "turning ON only the fourth switching element Q4" means turning OFF the first switching element Q1, turning OFF the second switching element Q2, turning OFF the third switching element Q3, and turning ON the fourth switching element Q4. Also, the phrase "allowing only the third switching element Q3 and the fourth switching element Q4 to be ON" means turning OFF the first switching element Q1, turning OFF the second switching element Q2, turning the third switching element Q3 ON, and keeping the fourth switching element Q4 ON. Thus, the phrase "allowing only the third switching element Q3 and the fourth switching element Q4 to be ON" means controlling the inverter circuit 1 toward the third switching state ("N"). As used herein, the phrase "allowing only the second switching element Q2 and the third switching element Q3 to be ON" means turning OFF the first switching element Q1, turning ON the second switching element Q2, keeping the third switching element Q3 ON, and turning OFF the fourth switching element Q4. Thus, the phrase "allowing only the second switching element Q2 and the third switching element Q3 to be ON" means controlling the inverter circuit 1 toward the second switching state ("0").

FIG. 14 illustrates a charging path for the third capacitor C37 in a situation where the control unit 60 has turned ON only the fourth switching element Q4 during the initial charging control in the multi-level inverter 100 according to the exemplary embodiment. When performing the first control, the control unit 60 charges the third capacitor C37 with electricity supplied from the power supply unit 9 by turning ON only the fourth switching element Q4 out of the first to fourth switching elements Q1-Q4 in each of the plurality of switching circuits 10. In this case, the charging path Ru93 for charging the third capacitor C37 with electricity supplied from the power supply unit 9 passes through the power supply unit 9, the third diode D37, the third resistor R37, the third capacitor C37, the second connection node 12, the fourth switching element Q4, and the power supply unit 9 in this order as shown in FIG. 14.

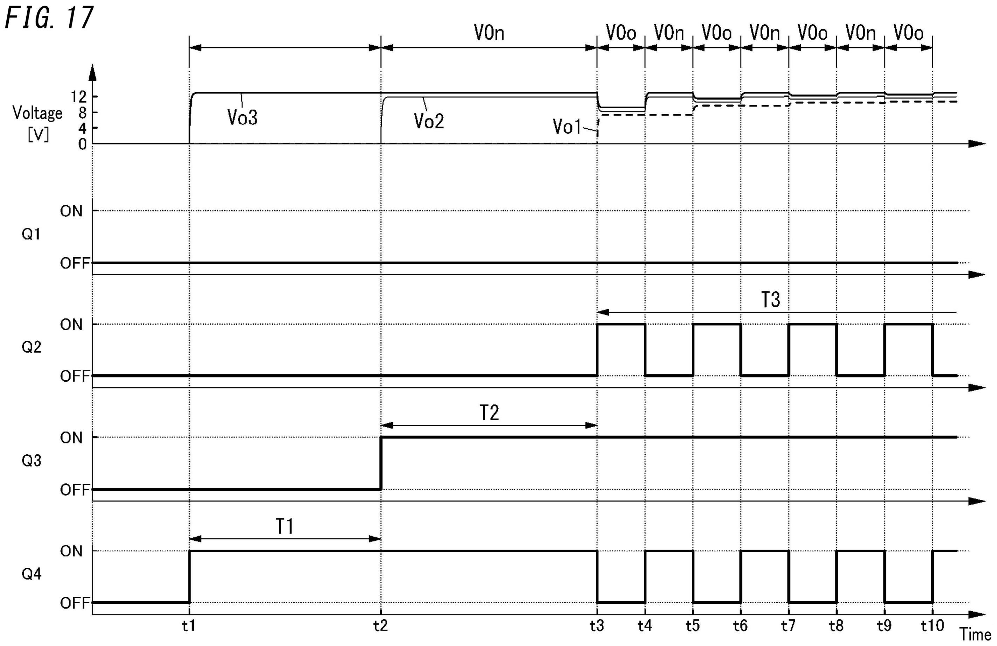

When performing the first control, the control unit 60 sets the duration T1 (refer to FIG. 17) of the ON period of the fourth switching element Q4 in a situation where only the fourth switching element Q4 is turned ON in each of the plurality of switching circuits 10 at a duration equal to or longer than a CR time constant determined by capacitance of the third capacitor C37 and a resistance value of the third resistor R37 of a third bootstrap circuit 73 corresponding to the fourth switching element Q4, for example. The duration T1 of the ON period of the fourth switching element Q4 may be 1 ms, for example.

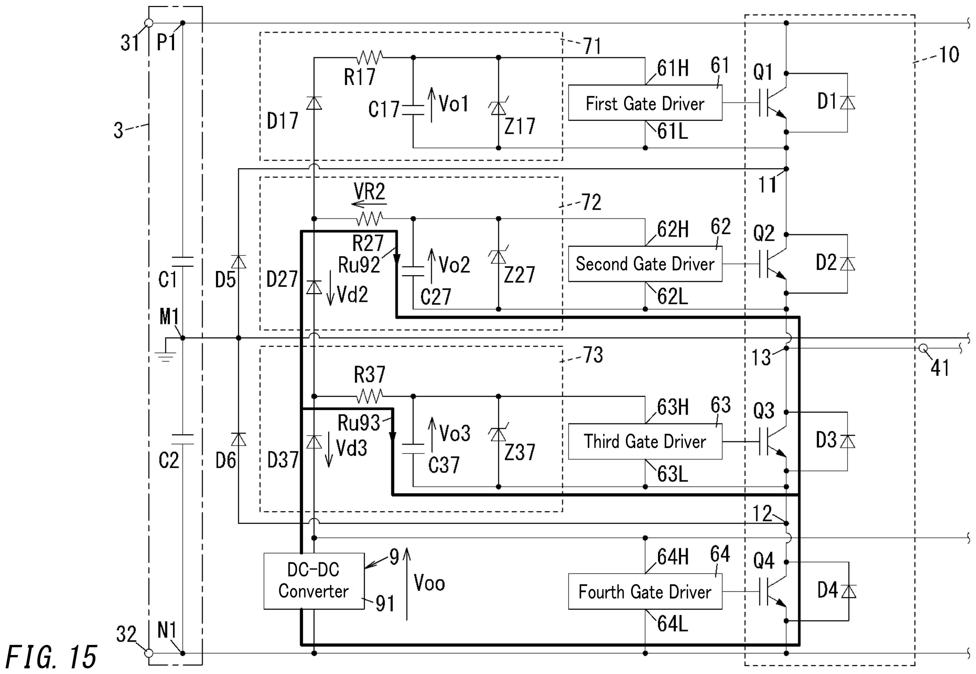

FIG. 15 illustrates a charging path for the second capacitor C27 and a charging path for the third capacitor C37 in a situation where the control unit allows only the third switching element Q3 and the fourth switching element Q4 to be ON while performing the initial charging control in the multi-level inverter according to the exemplary embodiment. When performing the first control, the control unit 60 charges the third capacitor C37 and the second capacitor C27 with electricity supplied from the power supply unit 9 by allowing only the third switching element Q3 and the fourth switching element Q4 to be ON out of the first to fourth switching elements Q1-Q4 after having turned ON only the fourth switching element Q4 as described above. In this case, the charging path Ru93 for charging the third capacitor C37 with electricity supplied from the power supply unit 9 passes through the power supply unit 9, the third diode D37, the third resistor R37, the third capacitor C37, the second connection node 12, the fourth switching element Q4, and the power supply unit 9 in this order as shown in FIG. 15. The charging path Ru92 for charging the second capacitor C27 with electricity supplied from the power supply unit 9 passes through the power supply unit 9, the third diode D37, the second diode D27, the second resistor R27, the second capacitor C27, the third connection node 13, the third switching element Q3, the second connection node 12, the fourth switching element Q4, and the power supply unit 9 in this order as shown in FIG. 15.

When performing the first control, the control unit 60 sets the duration T2 of the period in which only the third switching element Q3 and the fourth switching element Q4 are ON at a duration equal to or longer than a CR time constant determined by capacitance of the second capacitor C27 and a resistance value of the second resistor R27 of the second bootstrap circuit 72, for example. The duration T2 of the period in which only the third switching element Q3 and the fourth switching element Q4 are ON may be 1.1 ms, for example.

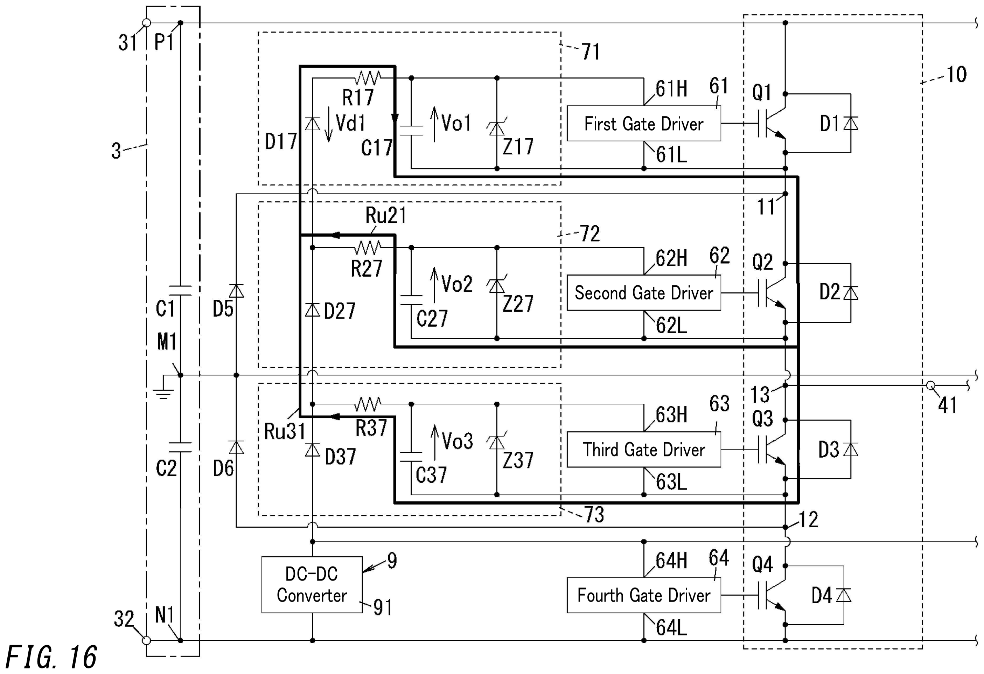

FIG. 16 illustrates a charging path for the first capacitor C17 and a charging path for the second capacitor C27 in a situation where the control unit allows only the second switching element Q2 and the third switching element Q3 to be ON while performing the initial charging control in the multi-level inverter 100 according to the exemplary embodiment. When performing the third control, the control unit 60 charges the first capacitor C17 with electricity supplied from the third capacitor C37 and the second capacitor C27 by allowing only the second switching element Q2 and the third switching element Q3 to be ON. In this case, the charging path R31 for charging the first capacitor C17 with electricity supplied from the third capacitor C37 passes through the third capacitor C37, the third resistor R37, the second diode D27, the first diode D17, the first resistor R17, the first capacitor C17, the first connection node 11, the second switching element Q2, the third connection node 13, the third switching element Q3, and the third capacitor C37 in this order as shown in FIG. 16. The charging path R21 for charging the first capacitor C17 with electricity supplied from the second capacitor C27 passes through the second capacitor C27, the second resistor R27, the first diode D17, the first resistor R17, the first capacitor C17, the first connection node 11, the second switching element Q2, and the second capacitor C27 in this order.

When performing the fourth control, the control unit 60 allows only the third switching element Q3 and the fourth switching element Q4 to be ON in each of the plurality of inverter circuits 1. The third capacitor C37 and the second capacitor C27 are charged with electricity supplied from the power supply unit 9 by allowing only the third switching element Q3 and the fourth switching element Q4 to be ON out of the first to fourth switching elements Q1-Q4. In this case, the charging path Ru93 for charging the third capacitor C37 with electricity supplied from the power supply unit 9 passes through the power supply unit 9, the third diode D37, the third resistor R37, the third capacitor C37, the second connection node 12, the fourth switching element Q4, and the power supply unit 9 in this order as shown in FIG. 15. On the other hand, the charging path Ru92 for charging the second capacitor C27 with electricity supplied from the power supply unit 9 passes through the power supply unit 9, the third diode D37, the second diode D27, the second resistor R27, the second capacitor C27, the third connection node 13, the third switching element Q3, the second connection node 12, the fourth switching element Q4, and the power supply unit 9 in this order as shown in FIG. 15.

The voltage with which the first capacitor C17 is charged by performing the third control and the fourth control once apiece is determined by the quantity of electric charges stored in the first capacitor C17, the quantity of electric charges stored in the third capacitor C37, and the quantity of electric charges stored in the second capacitor C27. The voltage Vo1 across the first capacitor C17 may be increased by alternately performing the third control and the fourth control. The control unit 60 sets, when performing the initial charging control, the duration T3 (refer to FIG. 17) of the period for which the third control and the fourth control are repeated at a duration equal to or longer than a CR time constant determined by the capacitance of the first capacitor C17 and a resistance value of the first resistor R17 of the plurality of first bootstrap circuits 71, for example. The duration T3 of the period in which the third control and the fourth control are repeated may be 2 ms, for example.

FIG. 17 shows the respective states of the first switching element Q1, the second switching element Q2, the third switching element Q3, and the fourth switching element Q4 and the respective waveforms of the voltage Vo1 across the first capacitor C17, the voltage Vo2 across the second capacitor C27, and the voltage Vo3 across the third capacitor C37 in a situation where the control unit 60 starts performing the charging control operation at a time t1.

In the example shown in FIG. 17, the control unit 60 starts performing the first control at the time t1, and therefore, only the fourth switching element Q4 is turned ON at the time t1. Turning ON only the fourth switching element Q4 causes the third capacitor C37 to start to be charged with electricity supplied from the power supply unit 9, thus increasing the voltage Vo3 across the third capacitor C37 to a fully charged voltage.

Thereafter, the control unit 60 allows only the third switching element Q3 and the fourth switching element Q4 to be ON at a time t2. Allowing only the third switching element Q3 and the fourth switching element Q4 to be ON causes the second capacitor C27 to start to be charged with electricity supplied from the power supply unit 9, thus increasing the voltage Vo2 across the second capacitor C27 to a fully charged voltage. Note that the control unit 60 selects a zero vector V0n[NNN] (which is designated by V0n in FIG. 17) as the voltage vector to allow only the third switching element Q3 and the fourth switching element Q4 to be ON.

Subsequently, the control unit 60 allows only the second switching element Q2 and the third switching element Q3 to be ON at a time t3. The control unit 60 selects a zero vector V0o[000] (which is designated by V0o in FIG. 17) as the voltage vector to allow only the second switching element Q2 and the third switching element Q3 to be ON.

Thereafter, the control unit 60 allows only the third switching element Q3 and the fourth switching element Q4 to be ON at a time t4. The control unit 60 selects a zero vector V0n[NNN] (which is designated by V0n in FIG. 17) as the voltage vector to allow only the third switching element Q3 and the fourth switching element Q4 to be ON.

Subsequently, the control unit 60 allows only the second switching element Q2 and the third switching element Q3 to be ON at a time t5. The control unit 60 selects a zero vector V0o[000] (which is designated by V0o in FIG. 17) as the voltage vector to allow only the second switching element Q2 and the third switching element Q3 to be ON.

Thereafter, the control unit 60 allows only the third switching element Q3 and the fourth switching element Q4 to be ON at a time t6. The control unit 60 selects a zero vector V0n[NNN] (which is designated by V0n in FIG. 17) as the voltage vector to allow only the third switching element Q3 and the fourth switching element Q4 to be ON. The voltage Vo2 across the second capacitor C27 in the period from the time t5 to the time t6 is higher than the voltage Vo2 across the second capacitor C27 in the period from the time t3 to the time t4. The voltage Vo3 across the third capacitor C37 in the period from the time t5 to the time t6 is higher than the voltage Vo3 across the third capacitor C37 in the period from the time t3 to the time t4.

Subsequently, the control unit 60 allows only the second switching element Q2 and the third switching element Q3 to be ON at a time t7. The control unit 60 selects a zero vector V0o[000] (which is designated by V0o in FIG. 17) as the voltage vector to allow only the second switching element Q2 and the third switching element Q3 to be ON. The voltage Vo1 across the first capacitor C17 in the period from the time t5 to the time t7 is higher than the voltage Vo1 across the first capacitor C17 in the period from the time t3 to the time t5.

Thereafter, the control unit 60 allows only the third switching element Q3 and the fourth switching element Q4 to be ON at a time t8. The control unit 60 selects a zero vector V0n[NNN] (which is designated by V0n in FIG. 17) as the voltage vector to allow only the third switching element Q3 and the fourth switching element Q4 to be ON. The voltage Vo2 across the second capacitor C27 in the period from the time t7 to the time t8 is higher than the voltage Vo2 across the second capacitor C27 in the period from the time t5 to the time t6. The voltage Vo3 across the third capacitor C37 in the period from the time t7 to the time t8 is higher than the voltage Vo3 across the third capacitor C37 in the period from the time t5 to the time t6.

Subsequently, the control unit 60 allows only the second switching element Q2 and the third switching element Q3 to be ON at a time t9. The control unit 60 selects a zero vector V0o[000] (which is designated by V0o in FIG. 17) as the voltage vector to allow only the second switching element Q2 and the third switching element Q3 to be ON. The voltage Vo1 across the first capacitor C17 in the period from the time t7 to the time t9 is higher than the voltage Vo1 across the first capacitor C17 in the period from the time t5 to the time t7.

Thereafter, the control unit 60 allows only the third switching element Q3 and the fourth switching element Q4 to be ON at a time t10. The control unit 60 selects a zero vector V0n[NNN] (which is designated by V0n in FIG. 17) as the voltage vector to allow only the third switching element Q3 and the fourth switching element Q4 to be ON. The voltage Vo2 across the second capacitor C27 in the period from the time t9 to the time t10 is higher than the voltage Vo2 across the second capacitor C27 in the period from the time t7 to the time t8. The voltage Vo3 across the third capacitor C37 in the period from the time t9 to the time t10 is higher than the voltage Vo3 across the third capacitor C37 in the period from the time t7 to the time t8.

(4) Recapitulation

In the multi-level inverter 100 according to the exemplary embodiment described above, the control unit 60 has an initial charging control function of making initial charging of each of the first capacitors C17, each of the second capacitors C27, and each of the third capacitors C37 during booting. The control unit 60 performs, during the initial charging control, either the first control of allowing only the third switching element Q3 and the fourth switching element Q4 to be ON after having turned ON only the fourth switching element Q4 in each inverter circuit 1, or the second control of allowing only the third switching element Q3 and the fourth switching element Q4 to be ON, and then alternately performs the third control of allowing only the second switching element Q2 and the third switching element Q3 to be ON and the fourth control of allowing only the third switching element Q3 and the fourth switching element Q4 to be ON.

In the multi-level inverter 100 according to the exemplary embodiment described above, the control unit 60 performs the initial charging control during booting, thus allowing for cutting down the switching loss. More specifically, the multi-level inverter 100 according to the exemplary embodiment may cut down the switching loss caused by each of the first switching elements Q1, each of the second switching elements Q2, and each of the third switching elements Q3, compared to a situation where the control unit 60 does not perform the initial charging control during booting.

In the multi-level inverter 100 according to the exemplary embodiment, the control unit 60 performs the initial charging control and then performs inverter control, thus allowing the voltage Vo1 across each of the first capacitors C17 to be further increased when the inverter control is started. For example, the voltage Vo1 across each of the first capacitors C17 may be increased to the fully charged voltage of the first capacitor C17. Thus, the multi-level inverter 100 according to the exemplary embodiment may further widen the difference between the gate voltage (gate-emitter voltage) applied to the first switching element Q1 in each inverter circuit 1 and the threshold voltage (of 5.8 V, for example) of the first switching element Q1, thus cutting down the switching loss caused by the first switching element Q1. In addition, the multi-level inverter 100 according to the exemplary embodiment may further increase the voltage Vo2 across each of the second capacitors C27 when the inverter control is started. For example, the voltage Vo2 across each of the second capacitors C27 may be increased to the fully charged voltage of the second capacitor C27. Thus, the multi-level inverter 100 according to the exemplary embodiment may further widen the difference between the gate voltage (gate-emitter voltage) applied to the second switching element Q2 in each inverter circuit 1 and the threshold voltage (of 5.8 V, for example) of the second switching element Q2, thus cutting down the switching loss caused by the second switching element Q2. Furthermore, the multi-level inverter 100 according to the exemplary embodiment may further increase the voltage Vo3 across each of the third capacitors C37 when the inverter control is started. For example, the voltage Vo3 across each of the third capacitors C37 may be increased to the fully charged voltage of the third capacitor C37. Thus, the multi-level inverter 100 according to the exemplary embodiment may further widen the difference between the gate voltage (gate-emitter voltage) applied to the third switching element Q3 in each inverter circuit 1 and the threshold voltage (of 5.8 V, for example) of the third switching element Q3, thus cutting down the switching loss caused by the third switching element Q3.

(Variations)

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure.

For example, the control unit 60 may perform, instead of the first control, the control of allowing only the third switching element Q3 and the fourth switching element Q4 to be ON (i.e., the second control) and then perform the third control and the fourth control alternately and repeatedly. Note that the duration of the ON period of the third switching element Q3 in a situation where the control unit 60 performs the second control is as long as the duration of the ON period of the fourth switching element Q4.

Also, the duration T1 of the period for which the control unit 60 turns ON only the fourth switching element Q4 by performing the first control does not have to be a period equal to or longer than the CR time constant of the third bootstrap circuit 73. Alternatively, the duration T1 may also be a period which is equal to or greater than 90% and less than 100% of the CR time constant.

Furthermore, the duration T2 of the period for which the control unit 60 allows only the third switching element Q3 and the fourth switching element Q4 to be ON by performing either the first control or the second control does not have to be a period equal to or longer than the CR time constant determined by the capacitance of the second capacitor C27 and the resistance value of the second resistor R27 of the second bootstrap circuit 72. Alternatively, the duration T2 may also be a period which is equal to or greater than 90% and less than 100% of the CR time constant.

Furthermore, the duration T3 (refer to FIG. 17) of the period for which the control unit 60 performs the third control and the fourth control repeatedly does not have to be a period equal to or longer than the CR time constant determined by the capacitance of the first capacitor C17 and the resistance value of the first resistor R17 of the plurality of first bootstrap circuits 71. Alternatively, the duration T3 may also be a period which is equal to or greater than 90% and less than 100% of the CR time constant, for example.

For example, the plurality of first switching elements Q1, the plurality of second switching elements Q2, the plurality of third switching elements Q3, and the plurality of fourth switching elements Q4 do not have to be IGBTs but may also be MOSFETs. In that case, in each of the plurality of first switching elements Q1, the plurality of second switching elements Q2, the plurality of third switching elements Q3, and the plurality of fourth switching elements Q4, the control terminal, first main terminal, and second main terminal thereof are a gate terminal, a drain terminal, and a source terminal, respectively. In each switching circuit 10, each of the MOSFETs serving as the first switching element Q1, the second switching element Q2, the third switching element Q3, and the fourth switching element Q4 may be, for example, a normally OFF n-channel MOSFET. The MOSFET is an Si-based MOSFET, for example. However, the MOSFET does not have to be an Si-based MOSFET but may also be an SiC-based MOSFET, for example.

Each of the plurality of first bootstrap circuits 71 includes the first Zener diode Z17 in the embodiments described above but may also have a configuration including no first Zener diodes Z17. Likewise, each of the plurality of second bootstrap circuits 72 includes the second Zener diode Z27 in the embodiments described above but may also have a configuration including no second Zener diodes Z27. Likewise, each of the plurality of third bootstrap circuits 73 includes the third Zener diode Z37 in the embodiments described above but may also have a configuration including no third Zener diodes Z37.

Furthermore, each of the plurality of first bootstrap circuits 71 includes the first resistor R17 and is configured to have its CR time constant determined by the capacitance of the first capacitor C17 and the resistance value of the first resistor R17 in the exemplary embodiment described above. Alternatively, each of the plurality of first bootstrap circuits 71 may include no first resistors R17 and may be configured to have its CR time constant determined by the capacitance of the first capacitor C17 and the equivalent series resistance (ESR) of the first capacitor C17. Each of the plurality of second bootstrap circuits 72 includes the second resistor R27 and is configured to have its CR time constant determined by the capacitance of the second capacitor C27 and the resistance value of the second resistor R27 in the exemplary embodiment described above. Alternatively, each of the plurality of second bootstrap circuits 72 may include no second resistors R27 and may be configured to have its CR time constant determined by the capacitance of the second capacitor C27 and the ESR of the second capacitor C27. Each of the plurality of third bootstrap circuits 73 includes the third resistor R37 and is configured to have its CR time constant determined by the capacitance of the third capacitor C37 and the resistance value of the third resistor R37 in the exemplary embodiment described above. Alternatively, each of the plurality of third bootstrap circuits 73 may include no third resistors R37 and may be configured to have its CR time constant determined by the capacitance of the third capacitor C37 and the ESR of the third capacitor C37.

Optionally, the multi-level inverter 100 may be configured such that the power supply unit 9 includes a plurality of (e.g., three) DC-DC converters 91. The plurality of DC-DC converters 91 are provided one to one for the plurality of (e.g., three) fourth gate drivers 64. Each of the plurality of DC-DC converters 91 is connected to a corresponding one of the plurality of fourth gate drivers 64 in parallel.

Furthermore, the multi-level inverter 100 does not have to include the plurality of switching circuits 10 but may also include only one switching circuit 10. If the multi-level inverter 100 includes only one switching circuit 10 instead of the plurality of switching circuits 10, then the multi-level inverter 100 includes one first gate driver 61, one second gate driver 62, one third gate driver 63, and one fourth gate driver 64 and includes one first bootstrap circuit 71, one second bootstrap circuit 72, and one third bootstrap circuit 73.

Furthermore, the control unit 60 does not have to be configured to perform voltage vector control but may also be configured to perform PWM control.

Also, the multi-level inverter 100 only needs to be a multi-level inverter with at least three levels and may be, for example, a five-level inverter.

(Aspects)

The foregoing description provides specific implementations for the following aspects of the present disclosure.

A multi-level inverter (100) according to a first aspect includes a DC power supply unit (3), an inverter circuit (1), and a controller (6). The DC power supply unit (3) includes a positive electrode (P1), a negative electrode (N1), and an intermediate potential node (M1). The inverter circuit (1) is connected between the positive electrode (P1) and the negative electrode (N1) of the DC power supply unit (3). The controller (6) controls the inverter circuit (1). The inverter circuit (1) includes a switching circuit (10), a first clamping diode (D5), and a second clamping diode (D6). The switching circuit (10) includes a first switching element (Q1), a second switching element (Q2), a third switching element (Q3), and a fourth switching element (Q4). In the switching circuit (10), the first switching element (Q1), the second switching element (Q2), the third switching element (Q3), and the fourth switching element (Q4) are connected in series to be arranged in this order from the positive electrode (P1) toward the negative electrode (N1). The first clamping diode (D5) is connected between a first connection node (11) of the first switching element (Q1) and the second switching element (Q2) and the intermediate potential node (M1). The second clamping diode (D6) is connected between a second connection node (12) of the third switching element (Q3) and the fourth switching element (Q4) and the intermediate potential node (M1). The controller (6) includes a first gate driver (61), a second gate driver (62), a third gate driver (63), a fourth gate driver (64), a first bootstrap circuit (71), a second bootstrap circuit (72), a third bootstrap circuit (73), a power supply unit (9), and a control unit (60). The first gate driver (61) drives the first switching element (Q1). The second gate driver (62) drives the second switching element (Q2). The third gate driver (63) drives the third switching element (Q3). The fourth gate driver (64) drives the fourth switching element (Q4). The first bootstrap circuit (71) includes a first capacitor (C17) connected to the first gate driver (61) in parallel and a first diode (D17) connected to the first capacitor (C17) in series. The second bootstrap circuit (72) includes a second capacitor (C27) connected to the second gate driver (62) in parallel and a second diode (D27) connected to the second capacitor (C27) in series. The third bootstrap circuit (73) includes a third capacitor (C37) connected to the third gate driver (63) in parallel and a third diode (D37) connected to the third capacitor (C37) in series. The power supply unit (9) is connected to the fourth gate driver (64) in parallel. The control unit (60) controls the first gate driver (61), the second gate driver (62), the third gate driver (63), and the fourth gate driver (64). The power supply unit (9) is connected to the third capacitor (C37) via the third diode (D37), connected to the second capacitor (C27) via the third diode (D37) and the second diode (D27), and connected to the first capacitor (C17) via the third diode (D37), the second diode (D27), and the first diode (D17). The control unit (60) has an initial charging control function of making initial charging of the first capacitor (C17), the second capacitor (C27), and the third capacitor (C37) during booting. The control unit (60) performs, during the initial charging control, either first control of allowing only the third switching element (Q3) and the fourth switching element (Q4) to be ON after having turned ON only the fourth switching element (Q4), or second control of allowing only the third switching element (Q3) and the fourth switching element (Q4) to be ON, and then alternately performs third control of allowing only the second switching element (Q2) and the third switching element (Q3) to be ON and fourth control of allowing only the third switching element (Q3) and the fourth switching element (Q4) to be ON.

This aspect allows for cutting down switching loss.

In a multi-level inverter (100) according to a second aspect, which may be implemented in conjunction with the first aspect, the first bootstrap circuit (71) further includes a first resistor (R17). The first resistor (R17) is connected between the first diode (D17) and the first capacitor (C17). The second bootstrap circuit (72) further includes a second resistor (R27). The second resistor (R27) is connected between the second diode (D27) and the second capacitor (C27). The third bootstrap circuit (73) further includes a third resistor (R37). The third resistor (R37) is connected between the third diode (D37) and the third capacitor (C37).

In a multi-level inverter (100) according to a third aspect, which may be implemented in conjunction with the second aspect, the control unit (60) sets, when performing either the first control or the second control, a duration (T1) of an ON period of the fourth switching element (Q4) at a duration equal to or longer than a CR time constant determined by capacitance of the third capacitor (C37) and a resistance value of the third resistor (R37) of the third bootstrap circuit (73).

This aspect allows for cutting down the switching loss caused by the third switching element (Q3) after the initial charging control.

In a multi-level inverter (100) according to a fourth aspect, which may be implemented in conjunction with the second aspect, the control unit (60) performs, when performing the initial charging control, the first control of allowing only the third switching element (Q3) and the fourth switching element (Q4) to be ON after having turned ON only the fourth switching element (Q4). The control unit (60) sets, when performing the first control, a duration (T1) of a period in which only the fourth switching element (Q4) is ON at a duration equal to or longer than a CR time constant determined by capacitance of the third capacitor (C37) and a resistance value of the third resistor (R37) of the third bootstrap circuit (73) and sets a duration (T2) for which only the third switching element (Q3) and the fourth switching element (Q4) are ON at a duration equal to or longer than a CR time constant determined by capacitance of the second capacitor (C27) and a resistance value of the second resistor (R27) of the second bootstrap circuit (72).

This aspect allows for cutting down the switching loss caused by each of the second switching element (Q2) and the third switching element (Q3) after the initial charging control.

In a multi-level inverter (100) according to a fifth aspect, which may be implemented in conjunction with any one of the second to fourth aspects, the control unit (60) sets, when performing the initial charging control, a duration of a period in which the third control and the fourth control are repeated at a duration equal to or longer than a CR time constant determined by capacitance of the first capacitor (C17) and a resistance value of the first resistor (R17) of a plurality of the first bootstrap circuits (71).

This aspect allows for cutting down the switching loss caused by the first switching element (Q1) after the initial charging control.

In a multi-level inverter (100) according to a sixth aspect, which may be implemented in conjunction with any one of the first to fifth aspects, the inverter circuit (1) includes three inverter circuits (1), the first gate driver (61) includes three first gate drivers (61), the second gate driver (62) includes three second gate drivers (62), the third gate driver (63) includes three third gate drivers (63), the fourth gate driver (64) includes three fourth gate drivers (64), the first bootstrap circuit (71) includes three first bootstrap circuits (71), the second bootstrap circuit (72) includes three second bootstrap circuits (72), and the third bootstrap circuit (73) includes three third bootstrap circuits (73).

This aspect allows for cutting down the switching loss in each of the three inverter circuits (1).

In a multi-level inverter (100) according to a seventh aspect, which may be implemented in conjunction with the sixth aspect, the three first bootstrap circuits (71) are provided one to one for the three second bootstrap circuits (72). The three first bootstrap circuits (71) are provided one to one for the three third bootstrap circuits (73). The three second bootstrap circuits (72) are provided one to one for the three third bootstrap circuits (73). The power supply unit (9) is connected to the three fourth gate drivers (64) in parallel. The power supply unit (9) is connected to the third capacitor (C37) via the third diode (D37) in each of the three third bootstrap circuits (73). The power supply unit (9) is connected, in each of the three second bootstrap circuits (72), to the second capacitor (C27) via the third diode (D37) of a corresponding one of the three third bootstrap circuits (73) and the second diode (D27). The power supply unit (9) is connected, in each of the three first bootstrap circuits (71), to the first capacitor (C17) via the third diode (D37) of a corresponding one of the three third bootstrap circuits (73), the second diode (D27) of a corresponding one of the three second bootstrap circuits (72), and the first diode (D17).

This aspect allows for contributing to downsizing.

In a multi-level inverter (100) according to an eighth aspect, which may be implemented in conjunction with any one of the first to seventh aspects, the power supply unit (9) includes a DC-DC converter (91).

## Industrial Applicability

A multi-level inverter according to the present disclosure allows for cutting down switching loss. As can be seen, the multi-level inverter according to the present disclosure is effectively applicable to various fields on an industrial basis.

## Reference Signs List

| 1 | Inverter Circuit |
|---|---|
| 3 | DC Power Supply Unit |
| 6 | Controller |
| 60 | Control Unit |
| 61 | First Gate Driver |
| 62 | Second Gate Driver |
| 63 | Third Gate Driver |
| 64 | Fourth Gate Driver |
| 9 | Power Supply Unit |
| 91 | DC-DC Converter |
| 10 | Switching Circuit |
| 11 | First Connection Node |
| 12 | Second Connection Node |
| 13 | Third Connection Node |
| 71 | First Bootstrap Circuit |
| 72 | Second Bootstrap Circuit |
| 73 | Third Bootstrap Circuit |
| 100 | Multi-Level Inverter |
| C17 | First Capacitor |

C27    Second Capacitor
C37    Third Capacitor
D5    First Clamping Diode
D6    Second Clamping Diode
D17    First Diode
D27    Second Diode
D37    Third Diode
P1    Positive Electrode
Q1    First Switching Element
Q2    Second Switching Element
Q3    Third Switching Element
Q4    Fourth Switching Element
M1    Intermediate Potential Node
N1    Negative Electrode
R17    First Resistor
R27    Second Resistor
R37    Third Resistor

**Claims**

1. A multi-level inverter comprising:

   a DC power supply unit including a positive electrode, a negative electrode, and an intermediate potential node;
   an inverter circuit connected between the positive electrode and the negative electrode of the DC power supply unit; and
   a controller configured to control the inverter circuit,
   the inverter circuit including:

   a switching circuit including a first switching element, a second switching element, a third switching element, and a fourth switching element which are connected in series to be arranged in this order from the positive electrode toward the negative electrode;
   a first clamping diode connected between a first connection node of the first switching element and the second switching element and the intermediate potential node; and
   a second clamping diode connected between a second connection node of the third switching element and the fourth switching element and the intermediate potential node,
   the controller including:

   a first gate driver configured to drive the first switching element;
   a second gate driver configured to drive the second switching element;
   a third gate driver configured to drive the third switching element;
   a fourth gate driver configured to drive the fourth switching element;
   a first bootstrap circuit including a first capacitor connected to the first gate driver in parallel and a first diode connected to the first capacitor in series;
   a second bootstrap circuit including a second capacitor connected to the second gate driver in parallel and a second diode connected to the second capacitor in series;
   a third bootstrap circuit including a third capacitor connected to the third gate driver in parallel and a third diode connected to the third capacitor in series;
   a power supply unit connected to the fourth gate driver in parallel; and
   a control unit configured to control the first gate driver, the second gate driver, the third gate driver, and the fourth gate driver,
   the power supply unit being connected to the third capacitor via the third diode, connected to the second capacitor via the third diode and the second diode, and connected to the first capacitor via the third diode, the second diode, and the first diode,
   the control unit having an initial charging control function of making initial charging of the first capacitor, the second capacitor, and the third capacitor during booting,
   the control unit being configured to, during the initial charging control,
   perform either first control of allowing only the third switching element and the fourth switching element to be ON after having turned ON only the fourth switching element or second control of allowing only the third switching element and the fourth switching element to be ON, and then
alternately perform third control of allowing only the second switching element and the third switching
element to be ON and fourth control of allowing only the third switching element and the fourth switching
element to be ON.

2. The multi-level inverter of claim 1, wherein

the first bootstrap circuit further includes a first resistor connected between the first diode and the first capacitor,
the second bootstrap circuit further includes a second resistor connected between the second diode and the
second capacitor, and
the third bootstrap circuit further includes a third resistor connected between the third diode and the third
capacitor.

3. The multi-level inverter of claim 2, wherein
the control unit is configured to, when performing either the first control or the second control, set a duration of an ON
period of the fourth switching element at a duration equal to or longer than a CR time constant determined by
capacitance of the third capacitor and a resistance value of the third resistor of the third bootstrap circuit.

4. The multi-level inverter of claim 2, wherein

the control unit is configured to, when performing the initial charging control,
perform the first control of allowing only the third switching element and the fourth switching element to be ON after
having turned ON only the fourth switching element, and
the control unit is configured to, when performing the first control, set a duration of a period in which only the fourth
switching element is ON at a duration equal to or longer than a CR time constant determined by capacitance of the
third capacitor and a resistance value of the third resistor of the third bootstrap circuit and set a duration for which
only the third switching element and the fourth switching element are ON at a duration equal to or longer than a CR
time constant determined by capacitance of the second capacitor and a resistance value of the second resistor of
the second bootstrap circuit.

5. The multi-level inverter of any one of claims 2 to 4, wherein
the control unit is configured to, when performing the initial charging control, set a duration of a period in which the third
control and the fourth control are repeated at a duration equal to or longer than a CR time constant determined by
capacitance of the first capacitor and a resistance value of the first resistor of a plurality of the first bootstrap circuits.

6. The multi-level inverter of any one of claims 1 to 5, wherein

the inverter circuit includes three inverter circuits,
the first gate driver includes three first gate drivers,
the second gate driver includes three second gate drivers,
the third gate driver includes three third gate drivers,
the fourth gate driver includes three fourth gate drivers,
the first bootstrap circuit includes three first bootstrap circuits,
the second bootstrap circuit includes three second bootstrap circuits, and
the third bootstrap circuit includes three third bootstrap circuits.

7. The multi-level inverter of claim 6, wherein

the three first bootstrap circuits are provided one to one for the three second bootstrap circuits,
the three first bootstrap circuits are provided one to one for the three third bootstrap circuits,
the three second bootstrap circuits are provided one to one for the three third bootstrap circuits,
the power supply unit is connected to the three fourth gate drivers in parallel,
the power supply unit is connected to the third capacitor via the third diode in each of the three third bootstrap
circuits,
the power supply unit is connected, in each of the three second bootstrap circuits, to the second capacitor via the
third diode of a corresponding one of the three third bootstrap circuits and the second diode, and
the power supply unit is connected, in each of the three first bootstrap circuits, to the first capacitor via the third
diode of a corresponding one of the three third bootstrap circuits, the second diode of a corresponding one of the three second bootstrap circuits, and the first diode.

8.  The multi-level inverter of any one of claims 1 to 7, wherein the power supply unit includes a DC-DC converter.

FIG. 1

## FIG. 2

EP 4 738 681 A1

*FIG. 3*

FIG. 4

FIG. 5

EP 4 738 681 A1

## FIG. 6

FIG. 7

FIG. 8

*FIG. 9*

*FIG. 10*

FIG. 11

EP 4 738 681 A1

*FIG. 12*

*FIG. 13*

FIG. 14

EP 4 738 681 A1

FIG. 15

*FIG. 16*

FIG. 17

## INTERNATIONAL SEARCH REPORT

| | International application No. |
|---|---|
| | **PCT/JP2024/020138** |

| **A.** | **CLASSIFICATION OF SUBJECT MATTER** |
|---|---|

*H02M 7/487*(2007.01)i
FI:   H02M7/487

According to International Patent Classification (IPC) or to both national classification and IPC

| **B.** | **FIELDS SEARCHED** |
|---|---|

Minimum documentation searched (classification system followed by classification symbols)

H02M7/487

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | JP 2018-133876 A (KABUSHIKI KAISHA TOSHIBA) 23 August 2018 (2018-08-23)<br>paragraphs [0001], [0009]-[0023], fig. 1-8 | 1-8 |
| A | JP 2020-182338 A (IHI CORP.) 05 November 2020 (2020-11-05)<br>paragraphs [0015]-[0135], fig. 1-16 | 1-8 |
| A | US 2012/0230059 A1 (STMICROELECTRONICS S.R.L.) 13 September 2012 (2012-09-13)<br>paragraphs [0031]-[0038], fig. 6-7 | 1-8 |
| P, A | WO 2024/053452 A1 (PANASONIC INTELLECTUAL PROPERTY MANAGEMENT CO.,<br>LTD.) 14 March 2024 (2024-03-14)<br>paragraphs [0013]-[0238], fig. 1-54 | 1-8 |
| P, A | WO 2024/053453 A1 (PANASONIC INTELLECTUAL PROPERTY MANAGEMENT CO.,<br>LTD.) 14 March 2024 (2024-03-14)<br>paragraphs [0011]-[0226], fig. 1-46 | 1-8 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/020138**

| Patent document cited in search report | | | Publication date (day/month/year) | Patent family member(s) | | | Publication date (day/month/year) |
|---|---|---|---|---|---|---|---|
| JP | 2018-133876 | A | 23 August 2018 | CN | 108429479 | A | |
| JP | 2020-182338 | A | 05 November 2020 | (Family: none) | | | |
| US | 2012/0230059 | A1 | 13 September 2012 | (Family: none) | | | |
| WO | 2024/053452 | A1 | 14 March 2024 | (Family: none) | | | |
| WO | 2024/053453 | A1 | 14 March 2024 | (Family: none) | | | |

Form PCT/ISA/210 (patent family annex) (July 2022)

41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018133876 A